# EUROPÄISCHE PATENTSCHRIFT

(11) **EP 3 186 309 B1**
(45) Veröffentlichungstag und Bekanntmachung des Hinweises auf die Patenterteilung: **27.02.2019**
(21) Anmeldenummer: 15760374.7
(22) Anmeldetag: 27.08.2015
(51) Int. Cl.: C08K 5/057, C09J 139/06

(54) **PRIMER FÜR KLEBEBÄNDER**
PRIMER FOR ADHESIVE TAPES
AMORCE POUR RUBANS ADHÉSIFS

(30) Priorität: 29.08.2014 DE 102014217245
(43) Veröffentlichungstag der Anmeldung: 05.07.2017
(73) Patentinhaber: tesa SE, 22848 Norderstedt (DE)
(72) Erfinder: DIETZE, Sebastian, 24568 Kaltenkirchen (DE); ELLRINGMANN, Kai, 22589 Hamburg (DE); KUPSKY, Marco, 25451 Quickborn (DE); NGUYEN, Duc Hung, 22395 Hamburg (DE); SCHÜMANN, Uwe, 25421 Pinneberg (DE)
(86) Internationale Anmeldenummer: PCT/EP2015/001749
(87) Internationale Veröffentlichungsnummer: WO 2016/030017

(56) Entgegenhaltungen:
- WO-A1-97/00922
- DE-A1-102011 077 510

## Beschreibung

Die vorliegende Erfindung betrifft eine Primer-Zusammensetzung für die Verbesserung der Adhäsion von Klebebändern auf schwer verklebbaren Substraten, insbesondere auf Substraten auf Olefinbasis wie zum Beispiel PP/EPDM und PP.

### Stand der Technik

Primer, oft auch Haftvermittler oder Adhesion Promoter genannt, sind vielfach in Form von kommerziellen Produkten oder aus der technischen Literatur bekannt. Eine Übersicht über die in Primer-Formulierungen verwendbaren Stoffe bzw. Stoffklassen findet sich in J. Bielemann, Lackadditive (1998), Kap. 4.3., S.114-129.

Primerzusammensetzungen werden in einer Vielzahl von Patentschriften offenbart, jedoch werden nur in wenigen Schriften Primer beschrieben, mit denen eine Haftungsverbesserung von Klebebändern erreicht werden soll.

In der Schrift WO 2008/094721 A1 wird im Zusammenhang mit Klebebandanwendungen eine Primerzusammensetzung auf Basis eines maleinsäureanhydridmodifizierten Polyolefins und eines organischen Diamins vorgeschlagen, mit der eine Haftungsverbesserung auf polyolefinbasierten Materialien erzielt werden soll.

In der JP 2008-156566 A wird für Klebebandanwendungen eine Primerzusammensetzung auf Basis eines azidischen Acrylat-Polymers und eines fluorhaltigen Copolymers offenbart.

Zur Verbesserung der Haftung eines Klebebandes auf melaminharzangestrichenen Substraten schlägt die WO 02/100961 A1 eine Primerzusammensetzung vor, die ein gepfropftes Copolymer eines Acrylat-Copolymers, gepfropft mit einer Aminoalkylgruppe, die endständige primäre Aminogruppen enthält, weiterhin ein Acrylat-Copolymer mit Carboxylgruppen in der molekularen Kette und ein Lösungsmittel enthält.

Die WO 03/052021 A1 beschreibt eine Primerzusammensetzung, die ein Polydiorganosiloxan-Polyharnstoff-Copolymer mit elektronenreichen Gruppen enthält und die Gestalt eines Primers, eines Klebstoffs, eines Haftklebstoffs oder eines anderen Beschichtungsstoffes haben kann. Auch diese Primerzusammensetzung wird in Zusammenhang mit Klebebandanwendungen genannt.

In den Schriften EP 833 865 B1, EP 833 866 B1, EP 739 383 B1 und US 5,602,202 werden Primerzusammensetzungen auf Basis von Mischungen aus Styrol- / Dien-Blockcoplymeren oder Styrol- / hydriertem Dien-Blockcopolymeren und ausgewählten Polyacrylaten beschrieben, die die Haftung von beidseitig haftklebrigen geschäumten Klebebändern auf sowohl niederenergetischen als auch höherenergetischen Oberflächen verbessern sollen.

Für den Gebrauch als Primerschicht innerhalb eines Klebebandes beschreibt die WO 03/035779 A eine Primerzusammensetzung auf Basis eines maleinierten thermoplastischen Elastomers, eines nicht-halogenierten Polyolefins und eines Harzes. Weitere Primer sind in WO 99/00922 und DE 102011077510 offenbart.

Mit den beschriebenen Primerzusammensetzungen kann zwar die Haftung von Klebebändern auf bestimmten Substraten verbessert werden, jedoch ist kein Primer bekannt, der in vielen Fällen die Haftung von Klebebändern auf bestimmten Substraten so stark verbessert, dass die Klebebänder nach einer Verklebungszeit von nur wenigen Minuten nur unter eigener Zerstörung oder Zerstörung des Substrats vom Substrat entfernt werden können.

Insbesondere ist kein Primer bekannt, mit dem die genannten Effekte der Haftungsverbesserung mit Klebebändern erreicht werden, die eine geschäumte oder schaumartige Elastomerschicht enthalten und für dauerhafte, klebstarke Verbindungen konzipiert sind. Weiterhin ist kein Primer bekannt, mit dem die genannten Effekte der Haftungsverbesserung sowohl mit Klebebändern auf Basis von Polyacrylaten als auch mit Klebebändern auf Basis von Blends aus Polyacrylaten und Synthesekautschuk (Styrol-Blockcopolymeren) erreicht werden.

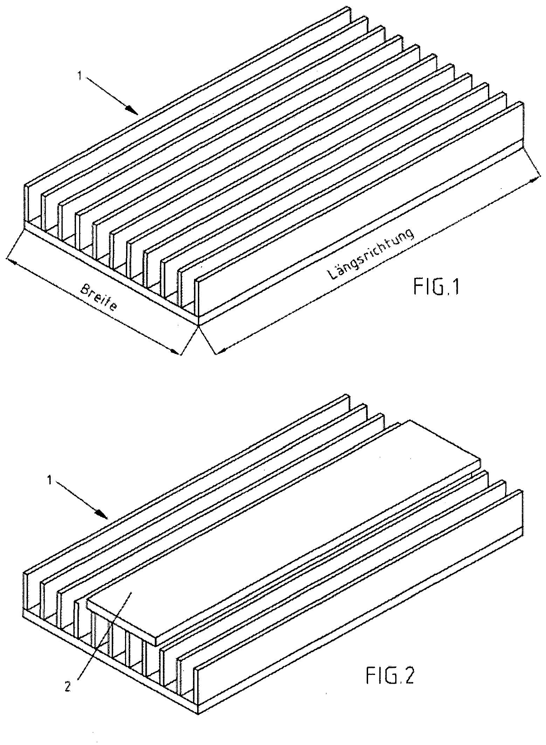

Außerdem hat sich gezeigt, dass eine besondere Schwierigkeit darin besteht, die genannten haftungsverbessernden Effekte auf Bauteilen aus geripptem PP/EPDM, wie in Figur 1 und 2 zur Veranschaulichung dargestellt, zu erzielen. Geripptes PP/EPDM erweist sich in der Praxis als deutlich schwieriger verklebbar als glattes PP/EPDM. Die Breite der Rippen beträgt dabei normalerweise ungefähr 0,8-1,0 mm, wobei die Oberflächen der Rippen nicht völlig eben sind, so dass die tatsächliche Breite pro Rippe, zu der ein ebenes Klebeband Kontakt hat, deutlich geringer ist. Die Anzahl der Rippen pro cm Breite beträgt bei üblichen Bauteilen jeweils ungefähr 5 Rippen. Bauteile der beschriebenen Art werden in der Automobilindustrie häufig verwendet und es besteht die Anforderung, diese mittels Klebebandapplikationen auf den Rippen zu verkleben.

Ferner ist kein Primer bekannt, mit dem der Effekt der Haftungsverbesserung von geschäumten oder schaumartigen Klebebändern auf Basis von Polyacrylaten oder auf Basis von Blends aus Polyacrylaten und Synthesekautschuk auf unvorbehandeltem Polypropylen in der Weise erreicht wird, dass die Klebebänder in vielen Fällen nach einer Verklebungszeit von nur wenigen Minuten nur unter eigener Zerstörung vom Polypropylen entfernt werden können. Dies gilt vor allem für Klebebänder, die für dauerhafte, klebstarke Verbindungen konzipiert sind und somit eine hohe innere Festigkeit haben.

Weiterhin ist kein Primer bekannt, mit dem die beschriebenen Effekte der Haftungsverbesserung von geschäumten oder schaumartigen Klebebändern auf Basis von Polyacrylaten oder auf Basis von Blends aus Polyacrylaten und Synthesekautschuk sowohl einerseits auf Substraten auf Olefinbasis, wie zum Beispiel PP/EPDM als auch andererseits auf Substraten wie verzinktem Stahl, ABS und PVC erreicht werden.

Neben den in Patentschriften beschriebenen Primern gibt es kommerzielle Produkte, wie zum Beispiel die 3M Primer 94® oder 4298 UV®, zur Verbesserung der Haftung von Klebebändern auf schwer verklebbaren, insbesondere sowohl unpolaren Untergründen wie Kunststoffen auf Basis von Polypropylen/Ethylenpropylen-dienmonomeren (PP/EPDM) als auch Metallen wie verzinktem Stahl. Nachteilig ist aber, dass diese Primer auf geripptem PP/EPDM insbesondere in Kombination mit geschäumten oder schaumartigen Klebebändern auf Basis von Blends aus Polyacrylaten und Synthesekautschuk den Effekt der Haftungsverbesserung nicht oder nur nach längerer Verklebungszeit in der Weise erfüllen, dass die Klebebänder nur unter eigener Zerstörung vom Substrat entfernt werden können. Außerdem wird mit diesen Primern in Kombination mit den genannten Klebebändern, insbesondere mit Klebebändern auf Basis von Blends aus Polyacrylaten und Synthesekautschuk, keine Haftungsverbesserung auf unvorbehandeltem Polypropylen in der Weise erzielt, dass die Klebebänder nach einer Verklebungszeit von nur wenigen Minuten nur unter eigener Zerstörung vom Polypropylen entfernt werden können.

Nachteilig an allen bekannten Primern ist weiterhin, dass sie keinen ausreichenden Schutz vor einer Feuchteunterwanderung sowie Korrosion gewährleisten. Im Falle von längerfristigen Feuchtwärmelagerungen oder Klimawechsellagerungen unter extremen Bedingungen, wie sie häufig in der Auto-, der Elektronik- und der Solarindustrie gefordert werden, zum Beispiel unter Einbeziehung von Temperaturen von 60 °C bis 90 °C bei gleichzeitiger relativer Luftfeuchtigkeit von 80 % bis 90 %, kommt es in der Regel zu Feuchteunterwanderungen. Die Feuchte wandert dabei entweder zwischen den Untergrund und den Primer oder zwischen den Primer und den Haftklebstoff des Klebebandes oder zwischen beides. Die Folge ist, dass das Klebeband nicht mehr optimal haftet und sich in unerwünschter Weise adhäsiv ablösen lässt. Weiterhin kann es zu unerwünschter Korrosion kommen, zum Beispiel zu einer Zinkoxidbildung unter der Verklebungsfläche im Falle von verzinktem Stahl als Untergrund.

### Aufgabe der Erfindung

Aufgabe der Erfindung ist die Bereitstellung eines Primers zur Verbesserung der Adhäsion von Klebebändern, insbesondere von Klebebändern, die eine geschäumte oder schaumartige Elastomerschicht enthalten und die für dauerhafte, klebstarke Verbindungen konzipiert sind. Die Adhäsion soll dabei so stark verbessert werden, dass die Klebebänder nach einer Verklebungszeit von nur wenigen Minuten nur unter eigener Zerstörung oder Zerstörung des Substrats vom Substrat entfernt werden können.

Insbesondere soll der Effekt der Verbesserung der Adhäsion sowohl mit Klebebändern auf Basis von Polyacrylaten als auch mit Klebebändern auf Basis von Blends aus Polyacrylaten und Synthesekautschuk (Styrol-Blockcopolymeren) erreicht werden.

Weiterhin soll der Effekt der Verbesserung der Adhäsion auch auf Bauteilen aus geripptem PP/EPDM erzielt werden (vergleiche dazu Figur 1 und 2). Die Breite der Rippen beträgt dabei üblicherweise ungefähr 0,8-1,0 mm, wobei die Oberflächen der Rippen nicht völlig eben sind, so dass die tatsächliche Breite pro Rippe, zu der ein ebenes Klebeband Kontakt hat, deutlich geringer ist. Die Anzahl der Rippen pro cm Breite beträgt jeweils ungefähr 5 Rippen.

Nach mehrwöchigen Feuchtwärmelagerungen oder Klimawechsellagerungen unter Einbeziehung von Temperaturen von 60 °C bis 90 °C bei gleichzeitiger relativer Luftfeuchtigkeit von größer oder gleich 80 % des auf den mit dem Primer beschichteten Untergrund aufgeklebten Klebebandes soll sich das Klebeband überwiegend nur unter eigener Zerstörung ablösen lassen, und es soll zu keinen oder zumindest geringeren Feuchteunterwanderungen kommen, als es mit den heute bekannten Primern der Fall ist.

### Lösung der Aufgabe

Die Aufgabe wird durch den Gegenstand der Erfindung gelöst.

Gegenstand der Erfindung ist in einer ersten und allgemeinen Ausführungsform ein Primer, der eine in einem oder mehreren Lösemitteln gelöste oder dispergierte Mischung G aus
- mindestens einem Copolymerisat, erhalten durch Copolymerisation einer Monomerenmischung, umfassend zu mindestens 90 Gew.-% die folgenden Monomere:
   - Vinylcaprolactam und/oder Vinylpyrrolidon;
   - eines oder mehrere der Monomere a) und/oder b):
      a) Acrylsäureester eines linearen, primären Alkohols mit 2 bis 10 Kohlenstoffatomen im Alkylrest des Alkohols,
      b) Acrylsäureester eines verzweigten, nichtzyklischen Alkohols mit 3 bis 12 Kohlenstoffatomen im Alkylrest des Alkohols;
- mindestens einem chlorierten Polyolefin; und
- mindestens einer Metallverbindung, ausgewählt aus der Gruppe bestehend aus Metallacetylacetonaten, Metallalkoxiden und Alkoxy-Metallacetylacetonaten umfasst wobei die Monomerenmischung n-Butylacrylat enthält.

"Vinylcaprolactam" bezeichnet N-Vinylcaprolactam (CAS-Nr. 2235-00-9) und "Vinylpyrrolidon" N-Vinyl-2-pyrrolidon (CAS-Nr. 88-12-0).

Unter einem chlorierten Polyolefin wird in dieser Erfindung ein Polyolefin verstanden, das chloriert wurde. Das Polyolefin kann beispielsweise Polypropylen oder Polyethylen oder ein Copolymerisat oder ein Blend aus Polypropylen und Polyethylen sein. Das Chlorieren kann in Lösemitteln, Dispersionen oder durch direktes Einwirken von gasförmigen Chlor erfolgt sein. Die CAS-Nr. von chloriertem Polypropylen lautet: 68442-33-1. Die CAS-Nr. von chloriertem Polyethylen lautet: 63231-66-3.

Unter einem Metallacetylacetonat wird erfindungsgemäß eine Koordinationsverbindung aus Acetylacetonat-Anionen und Metallkationen verstanden. Die allgemeine Formel lautet: M(acac)ₘ. M steht dabei für ein Metallkation, acac für das Acetylacetonat-Anion. Der IUPAC-Name für Acetylaceton lautet: Pentan-2,4-dion, die CAS-Nr. lautet: 123-54-6. Die Variable m steht für die Anzahl der Acetylacetonat-Anionen, die zum Ladungsausgleich erforderlich sind, und hängt ab von der Oxidationsstufe des Metallkations.

Der Begriff Metallalkoxid steht synonym für "Metallalkoholat". Es handelt sich um Koordinationsverbindungen der allgemeinen Formel: M(OR)ₙ. M steht dabei für ein Metallkation, OR für ein Alkoholatanion. R steht für einen Alkylrest. Die Variable n steht für die Anzahl der Alkoholatanionen, die zum Ladungsausgleich erforderlich sind, und hängt ab von der Oxidationsstufe des Metallkations.

Unter Alkoxy-Metallacetylacetonaten werden in dieser Schrift gemischte Koordinationsverbindungen sowohl aus Acetylacetonat- als auch aus Alkoholat-Anionen und Metallkationen verstanden. Die allgemeine Formel lautet: M(acac)ₘ(OR)ₙ. M steht dabei für ein Metallkation, acac für das Acetylacetonat-Anion, OR für ein Alkoholatanion. R steht für einen Alkylrest. Die Variablen m und n stehen für die Anzahl der Acetylacetonat-Anionen beziehungsweise Alkoholatanionen, die zum Ladungsausgleich erforderlich sind, und hängen ab von der Oxidationsstufe des Metallkations.

Erfindungsgemäße Primer weisen insbesondere eine starke Haftung sowohl auf glattem PP/EPDM als auch auf geripptem PP/EPDM einerseits und zu Klebebändern sowohl auf Basis von Polyacrylaten als auch auf Basis von Blends aus Polyacrylaten und Synthesekautschuk (Styrol-Blockcopolymeren) andererseits auf.

Unter PP/EPDM werden Blends (Mischungen) aus Polypropylen und EPDM verstanden. EPDM bezeichnet Ethylen-Propylen-Dien-Kautschuk.

Die haftvermittelnde Wirkung eines erfindungsgemäßen Primers setzt sehr schnell ein. Es wurde gefunden, dass ein auf die Primerschicht aufgeklebtes Klebeband schon kurze Zeit nach dem Aufkleben, beispielsweise nach ungefähr 3 Minuten, nicht mehr zerstörungsfrei von der auf der PP/EPDM-Oberfläche aufgetragenen Primerschicht abgelöst werden konnte.

### Nähere Beschreibung der Erfindung

Unter einem Primer wird erfindungsgemäß im Einklang mit DIN EN ISO 4618 ein Beschichtungsstoff zum Herstellen einer Grundbeschichtung verstanden. Allgemein wird ein Primer oder Beschichtungsstoff auf die Oberfläche eines Substrates aufgetragen, danach kommt es zur Filmbildung durch Verdunsten des Lösemittels und/oder durch einen anderen chemischen oder physikalischen Härtungs- oder Filmbildungsprozess, und anschließend kann auf die so hergestellte Schicht ein weiterer, anderer Stoff, zum Beispiel ein Lack, eine Farbe, ein Klebstoff oder ein Klebeband aufgebracht werden. Voraussetzung für eine haftvermittelnde Wirkung eines Primers ist, dass einerseits eine gute Haftung der Primerschicht zum Substrat, dessen Oberfläche auch als Untergrund bezeichnet wird, erzielt wird, und andererseits auf der hergestellten Primerschicht der darauf aufzubringende weitere, andere Stoff ebenfalls gut haftet. Ein Primer hat eine optimale haftvermittelnde Wirkung, wenn es beim Versuch, den auf den Primer aufgebrachten Stoff oder das auf den Primer aufgebrachte Klebprodukt abzuschälen, zum kohäsiven Versagen innerhalb des Stoffes, des Klebproduktes bzw. des Klebebandes kommt oder wenn es dabei zur Zerstörung des Substrates kommt, auf dem der Primer zuvor aufgetragen wurde. Wenn die zum Abschälen des auf den Primer aufgebrachten Stoffes, Klebproduktes oder Klebebandes erforderlichen Kräfte höher sind, als sie es sind, wenn kein Primer verwendet wird, ist eine Haftverbesserung bzw. eine Verbesserung der Adhäsionskraft gegeben. Je höher diese Kräfte sind, desto stärker ist die Haftverbesserung bzw. die Verbesserung der Adhäsionskraft.

Ein Lösemittel im Sinne der Erfindung ist jede bekannte Flüssigkeit, die geeignet ist, die im Hauptanspruch offenbarte Mischung zu lösen oder zumindest fein zu verteilen, ohne mit den erfindungsgemäßen Stoffen dieser Mischung eine unerwünschte chemische Reaktion einzugehen. Bevorzugte erfindungsgemäße Lösemittel sind organische Lösemittel, zum Beispiel Ester, Ketone, aliphatische oder aromatische Kohlenwasserstoffe sowie halogenierte Kohlenwasserstoffe. Wasser und andere anorganische Lösemittel sind ebenfalls vom Erfindungsgedanken eingeschlossen.

Unter einer dispergierten Mischung wird erfindungsgemäß eine feinverteilte, homogene Mischung verstanden. Der Grad der Feinverteilung und Homogenität wird nicht streng definiert, er muss aber ausreichend dafür sein, dass es nach dem Beschichten zur Ausbildung einer geschlossenen Schicht kommt und die Größe der nicht auf molekularer Ebene gelösten Agglomerate oder Aggregate genügend gering ist, dass die Funktion der Primerschicht als beispielsweise haftvermittelnde Schicht gewährleistet ist.

Die im erfindungsgemäßen Primer enthaltene Mischung G umfasst zumindest ein Copolymerisat, das durch Copolymerisation, bevorzugt durch radikalische Copolymerisation, einer Monomerenmischung erhalten wird, die zu mindestens 90 Gew.-% die folgenden Monomere umfasst:
- Vinylcaprolactam und/oder Vinylpyrrolidon;
- eines oder mehrere der folgenden Monomere a) und/oder b):
   a) Acrylsäureester eines linearen, primären Alkohols mit 2 bis 10 Kohlenstoffatomen im Alkylrest des Alkohols,
   b) Acrylsäureester eines verzweigten, nichtzyklischen Alkohols mit 3 bis 12 Kohlenstoffatomen im Alkylrest des Alkohols..

Bevorzugt ist das mindestens eine Copolymerisat der Mischung G des erfindungsgemäßen Primers ein Haftklebstoff. Besonders bevorzugt sind alle in der Mischung G enthaltenen Copolymerisate Haftklebstoffe.

Unter einem Haftklebstoff wird erfindungsgemäß, wie im allgemeinen Sprachgebrauch üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.
Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G"gilt dies entsprechend.

Haftklebstoffe, die Vinylcaprolactam und/oder Vinylpyrrolidon im Copolymerisat enthalten, weisen üblicherweise nur durchschnittliche Klebeeigenschaften auf. Umso überraschender war es, dass im Rahmen der vorliegenden Erfindung gefunden wurde, dass ein Primer, der als Haftklebstoff ein erfindungsgemäßes Copolymerisat mit Vinylcaprolactam und/oder Vinylpyrrolidon als Monomerkomponenten enthält, herausragende haftvermittelnde Eigenschaften aufweist und eine sehr feste Bindung von Klebebändern zu Substraten auf Olefinbasis, insbesondere PP/EPDM, herstellt.

Besonders bevorzugt ist das Copolymerisat ein Haftklebstoff, und die Monomerenmischung des Copolymerisats umfasst nur Vinylcaprolactam und/oder Vinylpyrrolidon sowie eines oder mehrere der Monomere a) und/oder b), d.h. das Copolymerisat ist nur aus diesen Monomeren aufgebaut, ohne dass weitere copolymerisierbare Monomere enthalten sind. Ein Primer, der auf einem derartigen Copolymerisat basiert, weist besonders gute haftvermittelnde Eigenschaften auf. Darüber hinaus kann vorteilhaft auf die Anwesenheit anderer - insbesondere weich machender - Comonomere und Komponenten als den genannten verzichtet werden. So kann beispielsweise vollständig auf Comonomere mit zyklischen Kohlenwasserstoffbausteinen verzichtet werden.
Lineare Alkylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat. Die Monomerenmischung enthält n-Butylacrylat. Verzweigte nichtzyklische Acrylsäureester mit 3 bis einschließlich 12 Kohlenstoffatomen im Alkylrest des Alkohols werden bevorzugt ausgewählt aus der Gruppe bestehend aus 2-Ethylhexylacrylat (EHA), 2-Propylheptylacrylat, Isooctylacrylat, iso-Butylacrylat, isoAmylacrylat und iso-Decylacrylat. Besonders bevorzugt sind die Monomere b) ausgewählt aus der Gruppe bestehend aus 2-Ethylhexylacrylat (EHA), 2-Propylheptylacrylat und Isooctylacrylat. "Isooctylacrylat" bezeichnet die Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können.
Vorzugsweise enthält die Monomerenmischung des Copolymerisats des erfindungsgemäßen Primers maximal 50 Gew.-%, besonders bevorzugt maximal 40 Gew.-% Vinylcaprolactam und/oder Vinylpyrrolidon, bezogen auf das Gesamtgewicht der Monomerenmischung. Ebenfalls bevorzugt enthält die Monomerenmischung vorzugsweise mindestens 10 Gew.-%, besonders bevorzugt mindestens 20 Gew.-%, insbesondere mindestens 30 Gew.-% Vinylcaprolactam und/oder Vinylpyrrolidon, bezogen auf das Gesamtgewicht der Monomerenmischung. Sofern Vinylcaprolactam und Vinylpyrrolidon in der Monomerenmischung vorliegen, ist jeweils der Gehalt an Vinylcaprolactam und Vinylpyrrolidon insgesamt, d.h. in Summe, gemeint.
Sehr bevorzugt besteht die Monomerenmischung aus Vinylcaprolactam und/oder Vinylpyrrolidon und genau einem Monomer der Sorte a), wobei besonders bevorzugt als Monomer a) n-Butylacrylat gewählt wird. Als weiteres Monomer ist Vinylcaprolactam besonders bevorzugt. Insbesondere besteht die Monomerenmischung daher aus Vinylcaprolactam und n-Butylacrylat. In einer derartigen Monomerenmischung beträgt das Gewichtsverhältnis Vinylcaprolactam : n-Butylacrylat bevorzugt von 10 : 90 bis 50 : 50, stärker bevorzugt von 20 : 80 bis 40 : 60.

Erfindungsgemäß kann die Monomerenmischung bis zu 10 Gew.-%, bezogen auf das Gesamtgewicht der Monomerenmischung, weitere copolymerisierbare Monomere neben den vom Erfindungsgegenstand ohnehin umfassten Monomeren enthalten. Als solche weiteren copolymerisierbaren Monomere können ohne besondere Einschränkung alle dem Fachmann bekannten radikalisch polymerisierbaren C=C-Doppelbindungs-haltigen Monomere oder Monomergemische verwendet werden. Beispielhaft können die weiteren Monomere ausgewählt sein aus der Gruppe bestehend aus: Methylacrylat, Methylmethacrylat, Ethylmethacrylat, Benzylacrylat, Benzylmethacrylat, Phenylacrylat, Phenylmethacrylat, Isobornylacrylat, Isobornylmethacrylat, t-Butylphenylacrylat, t-Butylaphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxy-ethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4- Heptafluorobutylacrylat, 2,2,3,3,4,4,4 Heptafluorobutylmethacrylat, 2,2,3,3,4,4,5,5,6,6,7,7,8,8,8 Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl) acrylamid; weiterhin N,N-Dialkyl-substituierte Amiden wie beispielsweise N,N-Dimethylacrylamid, N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril, Vinylethern wie Vinylmethylether, Ethylvinylether, Vinylisobutylether; Vinylestern wie Vinylacetat; Vinylhalogeniden wie Vinylchlorid, Vinylidenhalogeniden wie Vinylidenchlorid, Vinylpyridin, 4-Vinylpyridin, N-Vinylphthalimid, Styrol, α- und β-Methylstyrol, α-Butylstyrol, 4-n-Butylstyrol, 4-n-Decylstyrol, 3,4-Dimethoxystyrol. Makromonomeren wie 2-Polystyrolethylmethacrylat (Molekulargewicht MW von 4000 bis 13000 g/mol), Poly(Methylmethacrylat)ethylmethacrylat (MW von 2000 bis 8000 g/mol).

Das Monomerengemisch enthält bevorzugt maximal 1 Gew.-%, besonders bevorzugt maximal 0,1 Gew.-%, bezogen auf das Gesamtgewicht der Monomerenmischung, Acrylsäure. Insbesondere ist die Monomerenmischung frei von Acrylsäure.

Bevorzugt beträgt die Konzentration des Copolymerisats beziehungsweise der Gesamtheit aller Copolymerisate der Mischung G, bezogen auf das Gesamtgewicht des Primers, von 1 Gew.-% bis 30 Gew.-%, besonders bevorzugt von 2 Gew.-% bis 20 Gew.-%, insbesondere von 3 Gew.-% bis 10 Gew.%.

Erfindungsgemäße Primer enthalten mindestens ein chloriertes Polyolefin. Unter einem chlorierten Polyolefin wird in dieser Erfindung ein Polyolefin verstanden, das chloriert wurde. Das Polyolefin kann beispielsweise Polypropylen oder Polyethylen oder ein Copolymerisat oder ein Blend aus Polypropylen und Polyethylen sein. Das Chlorieren kann in Lösemitteln, Dispersionen oder durch direktes Einwirken von gasförmigen Chlor erfolgt sein. Das chlorierte Polyolefin kann in der Weise modifiziert sein, dass es optional mit einer α, β-ungesättigten Carbonsäure oder deren Anhydrid, insbesondere mit Maleinsäureanhydrid, und / oder mit Acrylat-Monomeren in einer Pfropfungsreaktion funktionalisiert wurde, wobei die Pfropfungsreaktion vor oder nach der Chlorierung erfolgt sein kann. Chlorierte Polyolefine sind im erfindungsgemäßen Primer bevorzugt zu einem Anteil von 0,1 bis 10 Gew.-%, stärker bevorzugt von 0,5 bis 5 Gew.-%, insbesondere von 1 bis 2 Gew.-%, jeweils bezogen auf das Gesamtgewicht des Primers, enthalten.

Erfindungsgemäße Primer enthalten mindestens eine Metallverbindung, ausgewählt aus der Gruppe bestehend aus Metallacetylacetonaten, Metallalkoxiden und Alkoxy-Metallacetylacetonaten. Synonyme für "Alkoxy-Metallacetylacetonat" sind Metallalkoxidacetylacetonat oder Metallacetylacetonatalkoxid. Die Metallverbindung darf erfindungsgemäß noch weitere Liganden tragen, ohne den Erfindungsgedanken zu verlassen.

Das Metall ist bevorzugt ausgewählt aus der Gruppe bestehend aus Titan, Aluminium, Zirkonium, Zink und Eisen; insbesondere ist das Metall Titan oder Zirkonium. Besonders bevorzugt ist die Metallverbindung ausgewählt aus Titan- oder Zirkoniumalkoxiden. Ganz besonders bevorzugt ist die Metallverbindung Titantetraisopropanolat Ti(*i*Pr)₄.

In einer vorteilhaften Ausführungsform enthält der erfindungsgemäße Primer keine Blockcopolymere des Typs Polystyrol/Polydien oder Polystyrol/hydriertes Polydien. Unter Blockcopolymeren des Typs Polystyrol/Polydien oder Polystyrol/hydriertes Polydien sind im Sinne dieser Schrift alle Polymere zu verstehen, deren Moleküle aus verknüpften Blöcken aus Polystyrol- und Polydien-Einheiten oder hydrierten oder teilhydrierten Polydien-Einheiten bestehen oder solche Blöcke zumindest zu wesentlichen Anteilen enthalten. Typische Beispiele für Polydien- sowie hydrierte oder teilhydrierte Polydien-Einheiten sind Polybutadien-, Polyisopren-, Ethylen-/Butylen- oder Ethylen-/Propylen-Blöcke. Es wurde gefunden, dass erfindungsgemäße Primer ohne Blockcopolymere des Typs Polystyrol/Polydien oder Polystyrol/hydriertes Polydien als zusätzlicher Bestandteil eine nochmals verbesserte Haftung des verklebten Klebebandes sowohl auf glattem als auch auf geripptem PP/EPDM bewirken.

In einer vorteilhaften Ausführungsform enthält der erfindungsgemäße Primer mindestens ein organofunktionelles Silan der allgemeinen Struktur (I)

(R¹O-)ₓSi(R²)yR³)_{z} (I),

worin die Reste R¹ unabhängig voneinander für einen C₁-C₄-Alkylrest, einen C₂-C₆-Alkoxyalkylrest oder einen Acetylrest stehen;
der Rest R² für einen Aminoalkylrest, eine Vinylgruppe, einen Methacryloxyalkylrest, einen Isocyanatoalkylrest, einen O-Methylcarbamatoalkylrest, einen Glycidoxyalkylrest oder einen Phenylrest steht; und
die Reste R³ unabhängig voneinander für einen C₁-C₁₈-Alkylrest stehen und gilt: x = 1, 2 oder 3; y = 0 oder 1 und z = 4 - x - y.

Bevorzugt stehen die Reste R¹ unabhängig voneinander für einen Methyl-, Ethyl-, 2-Methoxyethyl- oder einen Acetylrest. Die Reste R³ stehen unabhängig voneinander bevorzugt für einen Methyl-, Isooctyl-, Hexadecyl- oder einen Cyclohexylrest. Der Rest R² steht bevorzugt für einen Aminoalkyl-, Glycidoxyalkyl-, Vinyl-, Methacryloxymethyl-, 3-Methacryloxypropyl- oder einen Phenylrest, insbesondere für einen 3-Glycidoxy-(n-)propyl-oder einen Aminoalkylrest oder eine Vinylgruppe.

Besonders bevorzugt ist der Rest R² ein Glycidoxyalkylrest und y = 1. Ebenfalls besonders bevorzugt enthält das organofunktionelle Silan der allgemeinen Struktur (I) einen Aminoalkylrest oder eine Vinylgruppe. Insbesondere ist das bzw. sind die organofunktionelle(n) Silan(e) der allgemeinen Struktur (I) ausgewählt aus der Gruppe bestehend aus 3-Glycidoxypropyltrimethoxysilan (z.B. GENIOSIL® GF 80, Firma Wacker), 3-Glycidoxypropyltriethoxysilan (z.B. GENIOSIL® GF 82, Firma Wacker), N-Cyclohexylaminomethyl-methyldiethoxysilan, N-Cyclohexylaminomethyltriethoxysilan, N-Phenylaminomethyltrimethoxysilan, N-(2-Aminoethyl)-3-amino-propyltrimethoxysilan, N-Cyclohexyl-3-aminopropyltrimethoxysilan, 3-Aminopropyltriethoxysilan, N-(2-Aminoethyl)-3-aminopropylmethyldimethoxysilan, 3-Aminopropyltrimethoxysilan, , Vinyltrimethoxysilan, Vinyldimethoxymethylsilan, Vinyltriethoxysilan, Vinyltris(2-methoxyethoxy)-silan und Vinyltriacetoxysilan.

In einer vorteilhaften Ausführungsform des erfindungsgemäßen Primers enthält der Primer zusätzlich ein oder mehrere Epoxidharze. Mit Epoxidharzen sind hier alle unvernetzten, bei Raumtemperatur festen oder flüssigen, in geeigneten Lösungsmitteln löslichen, zwei oder mehr Epoxidgruppen tragenden Oligomere gemeint. In Frage kommen zum Beispiel Epoxidharze auf Basis von Bisphenol A und/oder Bisphenol F, Epoxy-Phenolnovolake, Epoxy-Cresolnovolake, Dicyclopentadien-Phenolnovolake, cycloaliphatische Epoxidharze, sowie Ester- oder Aminogruppen enthaltende Epoxidharze. Die Konzentration der Summe der Epoxidharze im Primer beträgt bevorzugt maximal 12 Gewichtsprozent, besonders bevorzugt maximal 6 Gewichtsprozent, insbesondere maximal 3 Gewichtsprozent, jeweils bezogen auf das Gesamtgewicht des Primers.

In einer weiteren vorteilhaften Ausführungsform des erfindungsgemäßen Primers enthält der Primer zusätzlich ein oder mehrere Styrolacrylatharze.
Unter Styrolacrylatharzen sind alle unvernetzten, bei Raumtemperatur festen oder flüssigen, in geeigneten Lösungsmitteln löslichen Harze zu verstehen, die zumindest aus Styrol sowie Acrylsäure, Methacrylsäure, Acrylsäureestern und / oder Methacrylsäureestern aufgebaut sind. Bevorzugte Styrolacrylatharze sind hydroxylgruppen haltig.

In einer weiteren vorteilhaften Ausführungsform des erfindungsgemäßen Primers enthält der Primer zusätzlich Acetylaceton (CAS-Nr. 123-54-6). Die Konzentration an Acetylaceton im Primer beträgt bevorzugt größer 0 bis 10,0 Gew.-%. Besonders vorteilhaft ist eine Konzentration zwischen 0,2 und 5,0 Gew.-%. Das Acetylaceton wird vorteilhafterweise in die Mischung G eingemischt, bevor die Zugabe der Metallacetylacetonate, Metallalkoxide oder Alkoxy-Metallacetylacetonate erfolgt.

Ein erfindungsgemäßer Primer kann über die bisher genannten Substanzen hinaus weitere Bestandteile enthalten, beispielsweise Additive wie andere Polymere, Harze, Weichmacher, Stabilisatoren, rheologische Additive, Füllstoffe, Pigmente, Vernetzer, Initiatoren, Katalysatoren, Beschleuniger und dergleichen.

Der erfindungsgemäße Primer enthält bevorzugt einen oder mehrere fluoreszierende optische Aufheller. Dies ist vorteilhaft, weil sich auf diese Weise ein geprimerter Untergrund kenntlich machen lässt. Ohne optische Kenntlichmachung ist es häufig schwer, einen geprimerten Untergrund von einem nicht geprimerten Untergrund zu unterscheiden, da die Auftragsstärke eines Primers in der Regel sehr dünn und somit optisch kaum wahrnehmbar ist. Ein bevorzugter fluoreszierender optischer Aufheller ist 2,5-Thiophendiylbis(5-tert-butyl-1,3-benzoxazol), CAS-Nr. 7128-64-5, kommerziell erhältlich unter dem Handelsnamen Tinopal OB®.

Bevorzugt beträgt die Summe der Gewichtsanteile der Mischung G und der Lösemittel am erfindungsgemäßen Primer mindestens 80 %, stärker bevorzugt mindestens 85 %, insbesondere mindestens 90 %, beispielsweise mindestens 92 % und ganz besonders bevorzugt mindestens 95 %.

Ein erfindungsgemäßer Primer enthält bevorzugt die folgenden Komponenten in den angegebenen Anteilen, jeweils bezogen auf das Gesamtgewicht des Primers:

| | |
|---|---|
| - Copolymerisat(e) | 2 bis 9 Gew.-% |
| - Lösemittel | 65 bis 95 Gew.-% |
| - chlorierte(s) Polyolefin(e) | 0,2 bis 5 Gew.-% |
| - Metallverbindung(en) | 0,2 bis 7 Gew.-% |
| - Additive | 0,1 bis 10 Gew.-%, |

wobei sich die Anteile zu 100 Gew.-% addieren.

Ein weiterer Gegenstand der Erfindung ist die Verwendung eines erfindungsgemäßen Primers zur Herstellung einer haftvermittelnden Schicht, bevorzugt einer haftvermittelnden Schicht in einer Dicke zwischen 0,1 µm und 10 µm, besonders bevorzugt einer haftvermittelnden Schicht in einer Dicke zwischen 1 µm und 5 µm.

Ein weiterer Gegenstand der Erfindung ist ein Verfahren zum Herstellen einer haftvermittelnden Schicht auf einem Substrat, welches das Aufbringen eines erfindungsgemäßen Primers auf ein Substrat und das Entfernen des einen oder der mehreren Lösemittel umfasst.

### Produkteigenschaften

Erfindungsgemäße Primer haben eine exzellente Haftung auf Olefin-basierten Substraten, insbesondere PP/EPDM. Sie weisen eine starke Haftung sowohl auf glattem PP/EPDM als auch auf geripptem PP/EPDM einerseits und zu Klebebändern sowohl auf Basis von Polyacrylaten als auch auf Basis von Blends aus Polyacrylaten und Synthesekautschuk (Styrol-Blockcopolymeren) andererseits auf. Sie sind somit exzellente Haftvermittler für Verklebungen der genannten Klebebänder auf insbesondere PP/EPDM.

Die Haftung von Klebebändern ist dabei so stark verbessert, dass die Klebebänder nach einer Verklebungszeit von nur wenigen Minuten nur unter eigener Zerstörung oder Zerstörung des Substrats vom Substrat entfernt werden können.
Die genannten Effekte der Haftungsverbesserung werden dabei insbesondere mit Klebebändern erreicht, die eine geschäumte oder schaumartige Elastomerschicht enthalten und für dauerhafte, klebstarke Verbindungen konzipiert sind.

Geripptes PP/EPDM (Figur 1) und eine Klebebandapplikation darauf (Figur 2) ist in Figuren 1 und 2 zur Veranschaulichung dargestellt. In der Figur 2 bedeuten:
1 Geripptes PP/EPDM-Substrat
2 in Längsrichtung verklebtes Klebeband.

Geripptes PP/EPDM erweist sich in der Praxis als deutlich schwieriger verklebbar als glattes PP/EPDM. Die Breite der Rippen beträgt dabei ungefähr 0,8-1,0 mm, wobei die Oberflächen der Rippen nicht völlig eben sind, so dass die tatsächliche Breite pro Rippe, zu der ein ebenes Klebeband Kontakt hat, deutlich geringer ist. Die Anzahl der Rippen pro cm Breite beträgt bei üblichen Bauteilen jeweils ungefähr 5 Rippen. Bauteile der beschriebenen Art werden in der Automobilindustrie häufig verwendet und es besteht die Anforderung, diese mittels Klebebandapplikationen auf den Rippen zu verkleben. Dies kann durch Haftungsvermittlung mit den erfindungsgemäßen Primern erreicht werden.

In einer vorteilhaften Ausführungsform kann der beschriebene Effekt der Haftungsverbesserung von geschäumten oder schaumartigen Klebebändern auf Basis von Polyacrylaten oder auf Basis von Blends aus Polyacrylaten und Synthesekautschuk auch auf unvorbehandeltem Polypropylen (PP) in der Weise erreicht werden, dass die Klebebänder nach einer Verklebungszeit von nur wenigen Minuten nur unter eigener Zerstörung vom Polypropylen entfernt werden können. Dies gilt insbesondere für Klebebänder, die für dauerhafte, klebstarke Verbindungen konzipiert sind und somit eine hohe innere Festigkeit haben.

In einer vorteilhaften Ausführungsform kann der beschriebene Effekt der Haftungsverbesserung von geschäumten oder schaumartigen Klebebändern auf Basis von Polyacrylaten oder auf Basis von Blends aus Polyacrylaten und Synthesekautschuk sowohl einerseits auf Substraten auf. Olefinbasis, wie zum Beispiel PP/EPDM als auch andererseits auf verzinktem Stahl, PP, ABS und PVC erreicht werden.

Mit den erfindungsgemäßen Primern ist weiterhin ein guter Schutz vor einer Feuchteunterwanderung sowie Korrosion gewährleistet. Im Falle von längerfristigen Feuchtwärmelagerungen oder Klimawechsellagerungen unter extremen Bedingungen, wie sie häufig in der Auto-, der Elektronik- und der Solarindustrie gefordert werden, zum Beispiel unter Einbeziehung von Temperaturen von 60 °C bis 90 °C bei gleichzeitiger relativer Luftfeuchtigkeit von 80 % bis 90 %, kommt es in der Regel zu Feuchteunterwanderungen. Die Feuchte wandert dabei entweder zwischen den Untergrund und den Primer oder zwischen den Primer und den Haftklebstoff des Klebebandes oder zwischen beides. Die Folge ist, dass das Klebeband nicht mehr optimal haftet und sich in unerwünschter Weise adhäsiv ablösen lässt. Weiterhin kann es zu unerwünschter Korrosion kommen, zum Beispiel zu einer Zinkoxidbildung unter der Verklebungsfläche im Falle von verzinktem Stahl als Untergrund. Diese unerwünschten Phänomene werden mit den erfindungsgemäßen Primern verhindert oder zumindest deutlich abgeschwächt.

Nach mehrwöchigen Feuchtwärmelagerungen oder Klimawechsellagerungen unter Einbeziehung von Temperaturen von 60 °C bis 90 °C bei gleichzeitiger relativer Luftfeuchtigkeit von größer oder gleich 80 % des auf den mit dem Primer beschichteten Untergrund aufgeklebten Klebebandes auf Basis von Polyacrylaten oder auf Basis von Blends aus Polyacrylaten und Synthesekautschuk lässt sich dieses Klebeband überwiegend nur unter eigener Zerstörung ablösen, und es kommt zu keiner oder zumindest nur zu einer geringeren Feuchteunterwanderung, als es mit den heute bekannten Primern der Fall ist.

Die Herstellung einer haftvermittelnden Schicht mit dem erfindungsgemäßen Primer erfolgt in bekannter Weise, indem nämlich auf einem Substrat zunächst der Primer aufgebracht wird. Im Anschluss lässt man das oder die Lösemittel verdunsten, woraufhin das Klebeband appliziert werden kann. Zwischen Aufbringen/Verdunsten des Lösemittels und der Applikation des Klebebandes können nur wenige Minuten, aber auch einige Tage oder Wochen liegen.

Ein weiterer Gegenstand der Erfindung ist die Verwendung des erfindungsgemäßen Primers zur Verbesserung der Haftung von Klebebändern, insbesondere von Klebebändern auf Basis von Polyacrylaten oder auf Basis von Blends aus Polyacrylaten und Synthesekautschuk (Styrol-Blockcopolymeren), auf Olefin-basierten Substraten, insbesondere auf PP/EPDM und PP, besonders bevorzugt auf PP/EPDM; und auf verzinktem Stahl, ABS und PVC; besonders bevorzugt auf Olefin-basierten Substraten, insbesondere auf PP/EPDM und PP, ganz besonders bevorzugt auf PP/EPDM.

### Beispiele

Die folgenden Prüfmethoden wurden eingesetzt, um die erfindungsgemäß hergestellten Muster kurz zu charakterisieren:

### Dynamisch Mechanische Analyse (DMA) zur Bestimmung des Speichermoduls G' und des Verlustmoduls G"

Zur Charakterisierung der Haftklebrigkeit der im Primer enthaltenen Copolymerisate erfolgten Bestimmungen des Speichermoduls G' und des Verlustmoduls G" mittels Dynamisch Mechanischer Analyse (DMA).
Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmodul G" wurden im Frequenzsweep von 10⁻¹ bis 10² rad/sec bei einer Temperatur von 23 °C bestimmt. G' und G" sind folgendermaßen definiert:
G' = τ/γ •cos(δ) (τ = Schubspannung, γ = Deformation, δ = Phasenwinkel = Phasenverschiebung zwischen Schubspannungs- und Deformationsvektor).
G" = T/γ •sin(δ) (T = Schubspannung, γ = Deformation, δ = Phasenwinkel = Phasenverschiebung zwischen Schubspannungs- und Deformationsvektor).
Die Definition der Winkelfrequenz lautet: ω = 2π • f (f = Frequenz). Die Einheit ist rad/sec.

Die Dicke der gemessenen haftklebrigen Copolymerisat-Proben betrug stets zwischen 0,9 und 1,1 mm (1 +/- 0,1 mm). Die haftklebrigen Copolymerisat-Proben wurden hergestellt, indem die weiter unten beschriebenen Copolymerisate auf einer beidseitig silikonisierten Polyesterfolie (Trennliner) ausgestrichen wurden, das Lösungsmittel bei 70° C abgedampft wurde und die so erhaltenen 100 µm dicken Ausstriche so oft aufeinandergelegt wurden, bis eine Dicke von ca. 1 mm erreicht war. Anschließend wurden die zu messenden Proben ausgestanzt. Der Probendurchmesser betrug jeweils 25 mm. Die Vorspannung erfolgte mit einer Belastung von 3N. Der Stress der Probenkörper betrug bei allen Messungen 2500 Pa.

### Klebkraft

Die Klebkraft wurde in Anlehnung an PSTC-101 bei Raumtemperatur bestimmt. Nach dieser Methode wurde zunächst der Primer auf das Substrat (den Untergrund) dünn aufgetragen. Dies erfolgte mit einem Pinselaufstrich des Primers auf das Substrat. Nach dem Abdunsten des Lösemittels wurde der zu messende Klebstreifen (das Klebeband) auf den nunmehr mit dem Primer in einer Schichtdicke von ungefähr 1 µm bis 10 µm versehenen Untergrund aufgebracht (aufgeklebt). Dazu wurde ein Streifen des Klebebandes in definierter Breite (Standard: 20 mm) auf den mit dem Primer beschichteten Untergrund durch fünfmaliges Überrollen mittels einer 5 kg Stahlrolle geklebt.

Die Zeit zwischen dem letzten Überrollen des Klebebandes und dem Abziehen betrug: a) 3 Minuten, b) 30 Minuten. Der Abzugswinkel betrug jeweils 90°, die Abzugsgeschwindigkeit 300 mm/min. Die zum Abziehen erforderliche Kraft ist die Klebkraft, welche in der Einheit N/cm angegeben wird und sich somit auf eine normierte Klebebandbreite von 1 cm bezieht. Ermittelt wurde neben der Klebkraft die Art des Versagens der Klebverbindung. Die gemessenen Klebstreifen waren mit einer 23 µm dicken, mit Trichloressigsäure angeätzten Polyesterfolie rückseitenverstärkt. Alle Messungen wurden in einem klimatisierten Raum bei 23 °C und 50 % relativer Luftfeuchte durchgeführt.

### Klimalagerungen

Die Verbunde aus dem mit dem erfindungsgemäßen Primer beschichteten Substrat und dem darauf aufgeklebten Klebeband wurden Lagerungen bei ausgewählten klimatischen Bedingungen unterworfen, um die klimatische Belastbarkeit der Verklebung zu ermitteln.
Lagerung a): zweiwöchige Lagerung in einem Klima von 85 °C und 85% relative Luftfeuchtigkeit;
Lagerung b): zweiwöchige Klimawechsellagerung mit den Zyklen 4 Stunden -40 °C, 4 Stunden Aufheizen / Abkühlen, 4 Stunden 80°C/80% relative Luftfeuchtigkeit.

Nach Ablauf der Lagerzeit wurden die mit einer 23 µm dicken, mit Trichloressigsäure angeätzten Polyesterfolie rückseitenverstärkten Proben der Klebkraftprüfung bei einem Abzugswinkel von jeweils 90° und einer Abzugsgeschwindigkeit von 300 mm/min in einem klimatisierten Raum bei 23 °C und 50 % relativer Luftfeuchte unterzogen.

### Statische Glasübergangstemperatur

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist. Aufheizkurven laufen mit einer Heizrate von 10 K/min. Die Muster werden in AI-Tiegeln mit gelochtem Deckel und Stickstoffatmosphäre vermessen. Es wird die zweite Aufheizkurve ausgewertet. Eine Glasübergangstemperatur ist als Wendepunkt im Thermogramm erkennbar.

### Molekulargewichte

Die Bestimmung des mittleren Molekulargewichtes Mw beziehungsweise des mittleren Molekulargewichtes M_{N} und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 10³ Å (10⁻⁷ m), ID 8,0 mm x 50 mm verwendet. Zur Auftrennung wurden die Säulen PSS-SDV, 5 µm, 10³ Å (10⁻⁷ m), 10⁵ Å (10⁻⁵ m) und 10⁶ Å (10⁻⁴ m) mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.

### Feststoffgehalt

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER)

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.) Folgende Substrate (Untergründe, auf die zunächst der Primer dünn, das heißt in einer Schichtdicke nach dem Abdunsten des Lösemittels von 1 bis 10 µm, aufgetragen und darauf anschließend das Klebeband aufgeklebt wurde) wurden verwendet:
- Substrat 1: PP/EPDM, Bezeichnung: HX TRC 135X/4 Black, PP/EPDM = Blend aus Polypropylen und EPDM; EPDM = Ethylen-Propylen-Dien-Kautschuk, glatte Oberfläche, Firma Basell Bayreuth Chemie GmbH
- Substrat 2: VW-Anbauteil aus PP/EPDM, Bezeichnung: VW, TKS, PP-EPDM-MD30, 5NO.854.940.A, komplex geformtes Bauteil mit teilweise gerippter Oberfläche
- Substrat 3: VW-Anbauteil aus PP/EPDM, Bezeichnung: VW, PP-EPDM T10, 2K3 853 535 HL MAXI, komplex geformtes Bauteil mit teilweise gerippter Oberfläche
- Substrat 4: VW-Anbauteil aus PP/EPDM, Bezeichnung: VW, TKS, PP-EPDM-MD30, 1TO.853.718.A, komplex geformtes Bauteil mit teilweise gerippter Oberfläche
- Substrat 5: PP (Polypropylen)-Prüfkörper, glatte Oberfläche, Firma Rocholl GmbH,
- Substrat 6: Prüfkörper aus feuerverzinktem Stahl (aus DX51 D+2275), glatte Oberfläche, Firma Rocholl GmbH
- Substrat 7: Prüfkörper aus ABS (Acrylnitril-Butadien-Styrol-Copolymerisat), glatte Oberfläche, Firma Rocholl GmbH
- Substrat 8: Prüfkörper aus PVC (Polyvinylchlorid), glatte Oberfläche, Firma Rocholl GmbH

Bei den komplex geformten Anbauteilen (Substrate 2 bis 4) mit teilweise gerippter Oberfläche wurde stets auf den gerippten Teil in Längsrichtung geklebt, wie in Figur 1 und 2 dargestellt. Auf die Rippen wurde vor dem Aufkleben des Klebebandes zunächst der Primer dünn aufgetragen, wie oben beschrieben. Die einzelnen Rippen hatten jeweils eine Breite von ungefähr 0,8 bis 1 mm, wobei die Oberflächen der Rippen nicht völlig eben waren, so dass die tatsächliche verklebte Breite pro Rippe deutlich geringer war. Die Anzahl der Rippen pro cm Breite betrug jeweils ungefähr 5 Rippen. Die angegebenen Klebkräfte beziehen sich auch hier auf die normierte Klebebandbreite von 1 cm und nicht auf die auf 1 cm addierten Breiten der einzelnen Rippen.

Die Klebebänder (Testklebebänder), mit denen der Primer geprüft wurde, basierten auf Polyacrylat-Haftklebstoffen und Haftklebstoffen auf Basis einer Acrylat/ Synthesekautschuk-Mischung.

Zur Herstellung dieser Haftklebstoffe wurden die folgenden Rohstoffe verwendet:

| Chemische Verbindung | Handelsname | Hersteller oder Lieferant | CAS-Nr. |
|---|---|---|---|
| B is-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 | UPPC AG | 3126-63-4 |
| 3,4-Epoxycyclohexylmethyl-3,4-epoxycyclohexancarboxylat | Uvacure 1500 | Cytec Industries Inc. | 2386-87-0 |
| Triethylentetramin | Epikure 925 | Hexion Speciality Chemicals | 112-24-3 |
| Mikroballons (MB) (trocken-unexpandierte Mikrosphären, Durchmesser 9 bis 15 µm, Expansions-Starttemperatur 106 bis 111 °C, TMA-Dichte ≤ 25 kg/m³) | Expancel 051 DU 40 | Expancel Nobel Industries | |
| Terpenphenolharz (Erweichungspunkt 110 °C; M_{w} = 500 bis 800 g/mol) | Dertophene T110 | DRT resins | 25359-84-6 |
| Terpenphenolharz (Erweichungspunkt 105 °C; M_{w} = 500 bis 800 g/mol) | Dertophene T105 | DRT resins | 25359-84-6 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |
| Styrol-Butadien-Block-Copolymer (ca. 31% Polystyrol-Anteil) | Kraton D1118 | Kraton Polymers | 9003-55-8 |
| Polyoxyethylen(15)kokosamin | Ethomeen C/25 | Akzo Nobel | 61791-14-8 |
| Reofos RDP | Tetraphenylresorcinol bis(diphenylphosphat) | Chemtura | 57583-54-7 |

Die Expansionsfähigkeit der Mikroballons kann durch die Bestimmung der TMA-Dichte [kg/m³] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikroballons kollabieren.

Die Bestimmung des Erweichungspunktes der Harze erfolgt nach DIN ISO 4625.

Weiterhin wurden die folgenden Lösemittel zur Herstellung der in den Testklebebändern enthaltenen Polyacrylat-Haftklebstoffe verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |
| Isopropanol | 67-63-0 | Shell |

### Testklebeband 1 (Einschicht-Acrylat-Klebeband)

Ein beispielhafter Polyacrylat-Haftklebstoff 1 zur Herstellung des Testklebebandes 1 wurde wie folgt hergestellt: Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/Isopropanol (94:6) befüllt. Nach 45minütiger Durchleitung von Stickstoffgas unter Rühren wurde der Reaktor auf 58 °C hochgeheizt und 40 g Vazo 67, gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.

Nach 5h sowie nach 7 h wurde jeweils mit 120 g Bis-(4-tert-butylcyclohexyl)-peroxy-dicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde in einem Aufkonzentrationsextruder bei Unterdruck vom Lösemittel befreit (Restlösemittelgehalt ≤ 0,3 Masseprozent). Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von T_{g} = - 35,6 °C.

Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun das geschmolzene Harz Dertophene T 110 zugegeben, so dass eine Konzentration des Harzes in der Schmelze von 28,3 Masseprozent entstand. Weiterhin wurde der Vernetzer Polypox R16 hinzugefügt. Seine Konzentration in der Schmelze betrug 0,14 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 0,7 Masseprozent. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand ein geschäumter Polyacrylat-Haftklebstoff, welcher anschließend mittels eines Walzenkalanders bahnförmig in einer Dicke von 0,8 mm ausgeformt und mit einer beidseitig silikonisierte Trennfolie (50 µm Polyester) eingedeckt wurde, währenddessen die chemische Vernetzungsreaktion voran schritt. Der aufgewickelte Film wurde vier Wochen bei Raumtemperatur gelagert, bevor er weiter für die Primerprüfung verwendet wurde. Der aufgewickelte Film ist das Testklebeband 1.

### Testklebeband 2 (Dreischicht-Acrylat-Klebeband)

Ein beispielhafter Polyacrylat-Haftklebstoff 2A zur Herstellung der mittleren Schicht des dreischichtigen Testklebebandes 2 wurde wie folgt hergestellt:

Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-tert-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-tert-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von Mw = 1 370 000 g/mol, eine Polydispersität von D (Mw/Mn) = 17,13 und eine statische Glasübergangstemperatur von Tg = - 38.0 °C.

Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun der Vernetzer Polypox R16 hinzugefügt. Seine Konzentration in der Schmelze betrug 0,22 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 2,0 Masseprozent. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand der geschäumte Polyacrylat-Haftklebstoff 2A, welcher anschließend mittels eines Walzenkalanders bahnförmig in einer Dicke von 0,8 mm ausgeformt und mit einer beidseitig silikonisierte Trennfolie (50 µm Polyester) eingedeckt wurde, währenddessen die chemische Vernetzungsreaktion voran schritt. Der aufgewickelte Film wurde vor der Weiterverarbeitung (siehe unten) einen Tag bei Raumtemperatur gelagert.

Ein beispielhafter Polvacrvlat-Haftklebstoff 2B zur Herstellung der beiden äußeren Schichten des dreischichtigen Testklebebandes 2 wurde wie folgt hergestellt:
Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Spezielbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert=butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Masseprozent des Vernetzers Uvacure® 1500 abgemischt, auf einen Feststoffgehalt von 30 % mit Aceton verdünnt und dann aus Lösung auf eine beidseitig silikonisierte Trennfolie (50 µm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Die Dicke betrug 50 µm. Der aufgewickelte Film wurde zwei Tage bei Raumtemperatur gelagert, bevor er weiter für die Herstellung des Testklebebandes 2 verwendet wurde.

Auf den geschäumten Film des Polyacrylat-Haftklebstoffs 2A wurde beidseitig ein Film des Polyacrylat-Haftklebstoffs 2B kaschiert. Unmittelbar vor dem Zukaschieren des Films des Polyacrylat-Haftklebstoffs 2B zu dem geschäumten Film des Polyacrylat-Haftklebstoffs 2A wurde die jeweils zu kaschierende Oberfläche des Films des Polyacrylat-Haftklebstoffs 2A bei einer Corona-Dosis von 35 Wmin/m² luftcorona-vorbehandelt. Vor der zweiten Kaschierung wurde die beidseitig silikonisierte Trennfolie des geschäumten Polyacrylat-Haftklebstoffs 2A ausgedeckt. Nach der zweiten Kaschierung wurde auch eine der beidseitig silikonisierten Trennfolien der beiden geschäumten Polyacrylat-Haftklebstoffe 2B ausgedeckt. Der dreischichtige Verbund aus Polyacrylat-Haftklebstoff 2B / Polyacrylat-Haftklebstoff 2A / Polyacrylat-Haftklebstoff 2B wurde aufgewickelt und vier Wochen bei Raumtemperatur gelagert, bevor er weiter für die Primerprüfung verwendet wurde. Der aufgewickelte Verbund ist das Testklebeband 2.

Die beispielhaft in ihrer Zusammensetzung und Herstellmethodik beschriebenen Polyacrylat-Haftklebstoffe der Testklebebänder 1 und 2 sind in DE 10 2010 062 669 ausführlich beschrieben. Der Offenbarungsgehalt dieser Schrift sei explizit in den Offenbarungsgehalt dieser Erfindung eingebunden.

### Testklebeband 3 (Einschicht-Klebeband auf Basis einer Acrylat/ Synthesekautschuk-Mischung)

Ein beispielhafter Polyacrylat-Haftklebstoff 3 zur Herstellung des Testklebebandes 3 wurde wie folgt hergestellt:
Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt.

Nach 5 h sowie nach 7 h wurde jeweils mit 150 g Bis-(4-*tert*-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde in einem Aufkonzentrationsextruder bei Unterdruck vom Lösemittel befreit (Restlösemittelgehalt ≤ 0,3 Masseprozent). Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

Die Mischung mit dem Synthesekautschuk wurde wie folgt hergestellt:
In einem Planetwalzenextruder wurde über einen Feststoffdosierer der Synthesekautschuk Kraton D1118 als Granulat aufgeschmolzen. Es folgte die Zugabe einer Mikroballonpaste (50 % Expancel 051DU40 in Ethomeen C25). Über einen Sidefeeder wurde das Polyacrylat-Basispolymer zugeführt, das in einem Einschneckenextruder vorgeschmolzen wurde, und ein Terpenphenolharz (Dertophen DT105) zudosiert. Der Mischung wurden Vernetzer- (Polypox R16 15 % in Rheofos RDP) und Beschleuniger- (15 % Epicure 925 in Rheofos RDP) Lösung zugegeben. Die Schmelze wurde durchmischt und über einen Zweiwalzenkalander zwischen zwei Trennfolien (silikonisierte PET-Folie) beschichtet. Es resultierte ein einschichtiges Klebeband mit einer Schichtdicke von 1000 µm und einer Dichte von 550 kg/m³. Dieses Klebeband ist das Testklebeband 3. Die Zusammensetzung lag bei 48 % Polyacrylat, 25 % Kraton D1118, 18 % Dertophen DT105, 4 % Vernetzer-/Beschleuniger-Lösung (Vernetzer:Beschleuniger = 1:1), 5 % Mikroballonpaste (Angaben in Gew.-%).

Zur Herstellung des erfindungsgemäß im Primer enthaltenen Copolymerisats wurden die folgenden Rohstoffe verwendet:

| Chemische Verbindung | Handelsname | Hersteller | CAS-Nr. |
|---|---|---|---|
| N-Vinylcaprolactam | | Sigma-Aldrich | 2235-00-9 |
| N-Vinyl-2-pyrrolidon | | Sigma-Aldrich | 88-12-0 |
| Acrylsäure-n-Butylester | n-Butylacrylat | Rohm & Haas | 141-32-2 |
| 2-Ethylhexylacrylat | | Brenntag | 103-11-7 |
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |

Weiterhin wurden die folgenden Lösemittel zur Herstellung des erfindungsgemäß im Primer enthaltenen Copolymerisats verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |

Die Polyacrylat-Haftklebstoffe zur Verwendung als Bestandteil im erfindungsgemäßen Primer wurden wie folgt hergestellt:

### Primer-Haftklebstoff 1

Ein für radikalische Polymerisationen konventioneller 100 L-Glasreaktor wurde mit 12,0 kg N-Vinylcaprolactam, 28,0 kg n-Butylacrylat und 26,7 kg Aceton/Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 1.

### Vergleichender Primer-Haftklebstoff 2

Ein für radikalische Polymerisationen konventioneller 100 L-Glasreaktor wurde mit 8,0 kg N-Vinylcaprolactam, 32,0 kg 2-Ethylhexylacrylat und 26,7 kg Aceton/Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 2.

### Primer-Haftklebstoff 3

Ein für radikalische Polymerisationen konventioneller 100 L-Glasreaktor wurde mit 8,0 kg N-Vinyl-2-pyrrolidon, 32 kg Butylacrylat, und 26,7 kg Aceton/Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 3.

### Primer-Haftklebstoff 4 für Vergleichsbeispiele

Ein für radikalische Polymerisationen konventioneller 100 L-Glasreaktor wurde mit 15,4 kg Butylacrylat, 24,4 kg 2-Ethylhexylacrylat und 26,7 kg Aceton/Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 40,0 Masseprozent mit Aceton verdünnt. Die so erhaltene Lösung ist der Primer-Haftklebstoff 4.

Die Primer-Haftklbstoffe 1 bis 4 wurden kurz per DMA-Messungen charakterisiert. Die G'-und G"-Kurven der Primer-Haftklebstoffe 1 bis 4 lagen im Deformationsfrequenzbereich von 10° bis 10¹ rad/sec bei 23 °C stets zumindest zum Teil im Bereich von 10³ bis 10⁷ Pa.

Zur Herstellung der erfindungsgemäßen Primer wurden die hinsichtlich ihrer Herstellung und Zusammensetzung oben beschriebenen Primer-Haftklebstoffe sowie die folgenden Rohstoffe verwendet:

| Chemische Verbindung/ Beschreibung (Herstellerangaben) | Handelsname | Hersteller oder Lieferant | CAS-Nr. |
|---|---|---|---|
| Chloriertes Polyolefin, ChlorGehalt: 20%, Mw=50.000, Maleinsäureanhydrid-modifiziert, Maleinsäureanhydrid-Gehalt: 2,0% | Hardlen F 6P | Toyobo | 560096-07-3 (95%), 3101-60-8 (5%) (Herstellerangaben) |
| Chloriertes Polyolefin, ChlorGehalt: 26%, M_{w}=100.000 | Hardlen DX 526 P | Toyobo | 68442-33-1 (94%) 3101-60-8 (5%) 67-66-3 (<1%) (Herstellerangaben) |
| Hydroxylgruppenhaltiges Polystyrolacrylat, ca. 65% in Butylacetat/Xylol 26:9 | Desmophen A 365 BA/X 65% | Bayer | |
| Epoxidharz auf Basis Bisphenol A, Mittleres Molekulargewicht < 700 | Epikote 828 | Hexion | 25068-38-6 |
| 3-Glydicoxypropyltrimethoxysilan | Geniosil® GF 80 | Wacker Chemie | 2530-83-8 |
| Vinyltrimethoxysilan | Geniosil® XL 10 | Wacker Chemie | 2768-02-7 |
| Titantetraisopropanolat | Tyzor® TPT | Lehmann & Voß | 546-68-9 |
| Tetra-n-butyl-Titanat | Tyzor® TnBT | Lehmann & Voß | 5593-70-4 |
| Bis(acetylacetonato)-isobutyl-isopropyl-Titanat | Tyzor® AA-95 | Lehmann & Voß | 97281-09-9 |
| Tetra-n-Butyl-Zirkonat | Tyzor® NBZ | Lehmann & Voß | 1071-76-7 |
| Acetylaceton | | Sigma-Aldrich | 123-54-6 |

Zur Herstellung weiterer Beispiele wurden die erfindungsgemäßen Primer mit folgenden Rohstoffen modifiziert:

| Chemische Verbindung/ Beschreibung (Herstellerangaben) | Handelsname | Hersteller oder Lieferant |
|---|---|---|
| SBS-Blockcopolymer | Kraton® D 1102 E | Kraton Polymers |
| Hydriertes SEBS-Blockcopolymer | Kraton® G 1652 E | Kraton Polymers |

Weiterhin wurden folgende Lösemittel zur Herstellung der erfindungsgemäßen Primer verwendet:

| Bezeichnung | CAS-Nr. | Hersteller oder Lieferant |
|---|---|---|
| Cyclohexan | 110-82-7 | Brenntag |
| Xylol | 106-42-3 | Biesterfeld |
| Ethylbenzol | 100-41-4 | Alfa Aesar |
| Aceton | 67-64-1 | Shell |
| Spezialbenzin 60/95 oder Naphtha (Erdöl) mit Wasserstoff behandelte leichte | 64742-49-0 | Shell, Exxon |
| Isopropanol | 67-63-0 | Shell |
| Ethylacetat | 141-78-6 | Brenntag |

Weiterhin wurde noch der folgende fluoreszierende optische Aufheller verwendet:

| Chemische Verbindung/ Beschreibung (Herstellerangaben) | Handelsname | Hersteller oder Lieferant | CAS-Nr. |
|---|---|---|---|
| 2,5-Thiophendiylbis(5-tert-butyl-1,3-benzoxazol) | Tinopal OB ® | BASF | 7128-64-5 |

Die in den Beispielen angegebenen Rohstoffe/ Komponenten wurden mit einem Laborrührwerk der Firma IKA® unter Verwendung eines Propellerrührers ungefähr zwei Stunden gemischt. Zuerst wurden jeweils die Lösemittel gemischt, dann wurde das chlorierte Polyolefin durch ungefähr einstündiges Rühren darin aufgelöst. Die weiteren Rohstoffe wurden danach jeweils einzeln zugemischt. In denjenigen Beispielen, in denen Acetylaceton verwendet wurde, erfolgte dessen Zugabe und Verrühren direkt im Anschluss an das Auflösen des chlorierten Polyolefins.

### Beispiel 1

### Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TPT | 0,50 |

| Lösemittel | |
|---|---|
| Cyclohexan | 41,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b)2Wo Klimawechsel |
| 1 (Einschicht AC) | 1 (PP/EPDM glatt) | 60,2 (K) | 64,1 (K) | 62,9 (K) | 60,5 (K) |
| 1 | 2 (PP/EPDM gerippt) | 5,6 (K) | 5,5 (K) | 5,2 (K) | 5,9 (K) |
| 1 | 3 (PP/EPDM gerippt) | 5,6 (K) | 5,4 (K) | 5,9 (K) | 5,8 (K) |
| 1 | 4 (PP/EPDM gerippt) | 6,3 (K) | 6,0 (K) | 6,9 (K) | 6,3 (K) |
| 1 | 5 (PP) | 8,0 (A) | 9,9 (A) | 7,0 (A) | 8,4 (A) |
| 1 | 6 (feuerverzinkter Stahl) | 40,8 (50%K) | 45,3 (60%K) | 36,8 (40%K) | 49,1 (60%K) |
| 1 | 7 (ABS) | 34,5 (30%K) | 45,2 (60%K) | 37,5 (40%K) | 47,8 (60%K) |
| 1 | 8 (PVC) | 35,2 (30%K) | 41,9 (50%K) | 39,2 (40%K) | 44,8 (50%K) |
| 2 (Dreischicht AC) | 1 (PP/EPDM glatt) | 63,2 (K) | 66,3 (K) | 64,2 (K) | 65,9 (K) |
| 2 | 2 (PP/EPDM gerippt) | 6,6 (K) | 6,9 (K) | 6,9 (K) | 7,0 (K) |
| 2 | 3 (PP/EPDM gerippt) | 6,2 (K) | 6,4 (K) | 6,4 (K) | 6,8 (K) |
| 2 | 4 (PP/EPDM gerippt) | 6,7 (K) | 6,7 (K) | 6,6 (K) | 6,7 (K) |
| 2 | 5 (PP) | 9,1 (A) | 9,7 (A) | 8,1 (A) | 9,9 (A) |
| 2 | 6 (feuerverzinkter Stahl) | 44,1 (50%K) | 45,9 (60%K) | 43,8 (50%K) | 47,9 (60%K) |
| 2 | 7 (ABS) | 44,0 (40%K) | 49,1 (70%K) | 47,2 (50%K) | 48,1 (50%K) |
| 2 | 8 (PVC) | 45,2 (40%K) | 51,9 (50%K) | 43,0 (40%K) | 48,9 (50%K) |
| 3 (Einschicht AC/SBS) | 1 (PP/EPDM glatt) | 55,2 (K) | 57,4 (K) | 56,5 (K) | 54,1 (K) |
| 3 | 2 (PP/EPDM gerippt) | 5,2 (K) | 5,6 (K) | 5,6 (K) | 5,5 (K) |
| 3 | 3 (PP/EPDM gerippt) | 5,6 (K) | 5,7 (K) | 5,9 (K) | 5,2 (K) |
| 3 | 4 (PP/EPDM gerippt) | 6,1 (K) | 6,0 (K) | 6,6 (K) | 6,2 (K) |
| 3 | 5 (PP) | 10,0 (A) | 12,9 (A) | 9,3 (A) | 10,9 (A) |
| 3 | 6 (feuerverzinkter Stahl) | 47,4 (50%K) | 55,6 (70%K) | 48,2 (50%K) | 51,3 (60%K) |
| 3 | 7 (ABS) | 39,3 (30%K) | 45,3 (60%K) | 38,9 (30%K) | 44,3 (50%K) |
| 3 | 8 (PVC) | 35,1 (30%K) | 41,2 (50%K) | 36,1 (40%K) | 41,9 (50%K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat | | | | | |

### Vergleichendes Beispiel 2

Zusammensetzung des Primers:

| Rohstoff / Komponente | Gewichtsprozent |
|---|---|
| Primer-Haftklebstoff 2 (40 Gewichtsprozent Feststoffanteil) | 10,40 |
| Hardlen DX 526 P | 1,50 |
| Tyzor TPT | 0,50 |

| Lösemittel | |
|---|---|
| Cyclohexan | 41,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 58,6 (K) | 61,9 (K) | 62,3 (K) | 55,5 (K) |
| 1 | 2 (PP/EPDM gerippt) | 4,7 (K) | 4,6 (K) | 4,2 (K) | 4,4 (K) |
| 1 | 3 (PP/EPDM gerippt) | 4,3 (K) | 4,4 (K) | 4,3 (K) | 4,1 (K) |
| 1 | 4 (PP/EPDM gerippt) | 4,9 (K) | 4,7 (K) | 4,9 (K) | 4,8 (K) |
| 1 | 5 (PP) | 7,5 (A) | 8,1 (A) | 8,0 (A) | 8,2 (A) |
| 1 | 6 (feuerverzinkter Stahl) | 36,7 (40%K) | 35,9 (40%K) | 35,1 (40%K) | 39,9 (50%K) |
| 1 | 7 (ABS) | 36,1 (30%K) | 40,7 (50%K) | 42,5 (40%K) | 46,1 (50%K) |
| 1 | 8 (PVC) | 39,2 (40%K) | 39,9 (50%K) | 43,1 (40%K) | 40,9 (40%K) |
| 2 (Dreischicht AC) | 1 (PP/EPDM glatt) | 59,9 (K) | 61,4 (K) | 62,1 (K) | 62,8 (K) |
| 2 | 2 (PP/EPDM gerippt) | 5,1 (K) | 5,9 (K) | 5,9 (K) | 5,1 (K) |
| 2 | 3 (PP/EPDM gerippt) | 5,7 (K) | 5,9 (K) | 5,0 (K) | 5,9 (K) |
| 2 | 4 (PP/EPDM gerippt) | 5,0 (K) | 5,6 (K) | 5,2 (K) | 5,9 (K) |
| 2 | 5 (PP) | 5,1 (A) | 6,7 (A) | 7,9 (A) | 6,5 (A) |
| 2 | 6 (feuerverzinkter Stahl) | 42,9 (40%K) | 49,5 (50%K) | 46,3 (50%K) | 45,3 (50%K) |
| 2 | 7 (ABS) | 50,2 (50%K) | 53,4 (70%K) | 49,0 (50%K) | 47,3 (50%K) |
| 2 | 8 (PVC) | 46,2 (40%K) | 48,8 (50%K) | 44,0 (40%K) | 47,3 (50%K) |
| 3 (Einschicht AC/SBS) | 1 (PP/EPDM glatt) | 55,2 (K) | 57,4 (K) | 56,5 (K) | 54,1 (K) |
| 3 | 2 (PP/EPDM gerippt) | 5,2 (K) | 5,6 (K) | 5,6 (K) | 5,5 (K) |
| 3 | 3 (PP/EPDM gerippt) | 5,6 (K) | 5,7 (K) | 5,9 (K) | 5,2 (K) |
| 3 | 4 (PP/EPDM gerippt) | 6,1 (K) | 6,0 (K) | 6,6 (K) | 6,2 (K) |
| 3 | 5 (PP) | 9,2 (A) | 10,5 (A) | 9,9 (A) | 11,2 (A) |
| 3 | 6 (feuerverzinkter Stahl) | 37,2 (30%K) | 45,8 (40%K) | 38,9 (30%K) | 40,3 (50%K) |
| 3 | 7 (ABS) | 46,3 (50%K) | 49,3 (60%K) | 48,3 (40%K) | 49,1 (50%K) |
| 3 | 8 (PVC) | 35,7 (30%K) | 39,2 (50%K) | 39,1 (40%K) | 40,6 (50%K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat | | | | | |

### Beispiel 3

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TnBT | 0,50 |

| Lösemittel | |
|---|---|
| Cyclohexan | 41,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 59,4 (K) | 63,8 (K) | 58,9 (K) | 63,3 (K) |
| 1 | 2 (PP/EPDM gerippt) | 5,9 (K) | 6,2 (K) | 5,4 (K) | 5,5 (K) |
| 1 | 3 (PP/EPDM gerippt) | 5,6 (K) | 6,0 (K) | 5,0 (K) | 5,3 (K) |
| 1 | 4 (PP/EPDM gerippt) | 6,8 (K) | 7,2 (K) | 6,9 (K) | 6,6 (K) |
| 1 | 5 (PP) | 10,8 (A) | 11,5 (A) | nb | nb |
| 1 | 6 (feuerverzinkter Stahl) | 42,1 (50%K) | 45,9 (50%K) | nb | nb |
| 1 | 7 (ABS) | 41,5 (50%K) | 49,2 (60%K) | nb | nb |
| 1 | 8 (PVC) | 40,7 (50%K) | 51,9 (60%K) | nb | nb |
| 3 (Einschicht AC/SBS) | 1 (PP/EPDM glatt) | 52,1 (K) | 55,1 (K) | 54,1 (K) | 52,6 (K) |
| 3 | 2 (PP/EPDM gerippt) | 4,8 (K) | 4,8 (K) | 5,2 (K) | 5,1 (K) |
| 3 | 3 (PP/EPDM gerippt) | 4,7 (K) | 4,9 (K) | 4,9 (K) | 5,2 (K) |
| 3 | 4 (PP/EPDM gerippt) | 4,3 (K) | 4,9 (K) | 5,9 (K) | 4,8 (K) |
| 3 | 5 (PP) | 12,5 (A) | 13,6 (A) | nb | nb |
| 3 | 6 (feuerverzinkter Stahl) | 37,2 (40%K) | 45,0 (50%K) | nb | nb |
| 3 | 7 (ABS) | 42,3 (50%K) | 48,0 (50%K) | nb | nb |
| 3 | 8 (PVC) | 45,5 (50%K) | 47,1 (50%K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 4

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TPT | 1,00 |
| Geniosil GF 80 | 0,50 |

| Lösemittel | |
|---|---|
| Cyclohexan | 40,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 58,2 (K) | 59,8 (K) | 59,9 (K) | 65,1 (K) |
| 1 | 2 (PP/EPDM gerippt) | 5,5 (K) | 6,9 (K) | 5,4 (K) | 5,5 (K) |
| 1 | 3 (PP/EPDM gerippt) | 5,3 (K) | 6,8 (K) | 5,0 (K) | 5,3 (K) |
| 1 | 4 (PP/EPDM gerippt) | 6,5 (K) | 6,1 (K) | 6,0 (K) | 7,4 (K) |
| 1 | 5 (PP) | 30,9 (50%K) | 42,5 (50%K) | nb | nb |
| 1 | 6 (feuerverzinkter Stahl) | 62,1 (K) | 65,0 (K) | nb | nb |
| 1 | 7 (ABS) | 49,2 (60%K) | 49,9 (60%K) | nb | nb |
| 1 | 8 (PVC) | 44,7 (50%K) | 51,1 (60%K) | nb | nb |
| 3 (Einschicht AC/SBS) | 1 (PP/EPDM glatt) | 49,1 (K) | 51,4 (K) | 54,9 (K) | 54.3 (K) |
| 3 | 2 (PP/EPDM gerippt) | 4,1 (K) | 5,0 (K) | 5,1 (K) | 4,5 (K) |
| 3 | 3 (PP/EPDM gerippt) | 4,8 (K) | 5,7 (K) | 4,4 (K) | 4,9 (K) |
| 3 | 4 (PP/EPDM gerippt) | 4,4 (K) | 4,9 (K) | 5,0 (K) | 4,7 (K) |
| 3 | 5 (PP) | 25,9 (30%K) | 33,1 (40%K) | nb | nb |
| 3 | 6 (feuerverzinkter Stahl) | 47,9 (50%K) | 47,0 (50%K) | nb | nb |
| 3 | 7 (ABS) | 44,1 (50%K) | 46,0 (50%K) | nb | nb |
| 3 | 8 (PVC) | 44,5 (50%K) | 45,1 (50%K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 5

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TnBT | 1,00 |
| Geniosil GF 80 | 0,50 |

| Lösemittel | |
|---|---|
| Cyclohexan | 40,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 59,7 (K) | 62.1 (K) | 60,3 (K) | 60,9 (K) |
| 1 | 2 (PP/EPDM gerippt) | 5,7 (K) | 5,9 (K) | 5,9 (K) | 5,6 (K) |
| 1 | 3 (PP/EPDM gerippt) | 5,8 (K) | 5,9 (K) | 5,2 (K) | 5,5 (K) |
| 1 | 4 (PP/EPDM gerippt) | 6,0 (K) | 6,9 (K) | 6,6 (K) | 6,1 (K) |
| 1 | 5 (PP) | 35,2 (50%K) | 39,2 (50%K) | nb | nb |
| 1 | 6 (feuerverzinkter Stahl) | 65,1 (K) | 67,9 (K) | nb | nb |
| 1 | 7 (ABS) | 50,2 (60%K) | 52,5 (60%K) | nb | nb |
| 1 | 8 (PVC) | 48,6 (50%K) | 47,1 (50%K) | nb | nb |
| 3 (Einschicht AC/SBS) | 1 (PP/EPDM glatt) | 55,3 (K) | 53,4 (K) | 56,7 (K) | 55,1 (K) |
| 3 | 2 (PP/EPDM gerippt) | 5,1 (K) | 5,8 (K) | 5,8 (K) | 5,2 (K) |
| 3 | 3 (PP/EPDM gerippt) | 5,2 (K) | 5,4 (K) | 5,9 (K) | 6,5 (K) |
| 3 | 4 (PP/EPDM gerippt) | 5,4 (K) | 5,9 (K) | 6,3 (K) | 6,2 (K) |
| 3 | 5 (PP) | 35,2 (50%K) | 43,1 (50%K) | nb | nb |
| 3 | 6 (feuerverzinkter Stahl) | 43,3 (50%K) | 47,6 (50%K) | nb | nb |
| 3 | 7 (ABS) | 41,8 (50%K) | 47,2 (50%K) | nb | nb |
| 3 | 8 (PVC) | 54,2 (50%K) | 55,6 (50%K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 6

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Acetylaceton | 0,50 |

| Lösemittel | |
|---|---|
| Cyclohexan | 40,60 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 61,6 (K) | 63,5 (K) | 60,8 (K) | 61,3 (K) |
| 1 | 2 (PP/EPDM gerippt) | 6,1 (K) | 6,6 (K) | 6,2 (K) | 6,0 (K) |
| 1 | 3 (PP/EPDM gerippt) | 5,9 (K) | 6,3 (K) | 6,4 (K) | 6,2 (K) |
| 1 | 4 (PP/EPDM gerippt) | 6,3 (K) | 6,9 (K) | 6,7 (K) | 5,1 (K) |
| 1 | 5 (PP) | 25,5 (30%K) | 29,1 (30%K) | nb | nb |
| 1 | 6 (feuerverzinkter Stahl) | 64,1 (K) | 65,6 (K) | nb | nb |
| 1 | 7 (ABS) | 56,3 (90%K) | 59,5 (90%K) | nb | nb |
| 1 | 8 (PVC) | 58,2 (90%K) | 56,9 (90%K) | nb | nb |
| 3 (Einschicht AC/SBS) | 1 (PP/EPDM glatt) | 57,1 (K) | 54,3 (K) | 54,1 (K) | 53,5 (K) |
| 3 | 2 (PP/EPDM gerippt) | 5,5 (K) | 5,7 (K) | 4,2 (K) | 4,6 (K) |
| 3 | 3 (PP/EPDM gerippt) | 5,5 (K) | 5,1 (K) | 5,2 (K) | 6,7 (K) |
| 3 | 4 (PP/EPDM gerippt) | 5,0 (K) | 6,9 (K) | 6,0 (K) | 4,2 (K) |
| 3 | 5 (PP) | 55,8 (90%K) | 59,2 (90%K) | nb | nb |
| 3 | 6 (feuerverzinkter Stahl) | 42,5 (50%K) | 46,2 (50%K) | nb | nb |
| 3 | 7 (ABS) | 51,3 (70%K) | 58,9 (90%K) | nb | nb |
| 3 | 8 (PVC) | 55,2 (80%K) | 59,1 (90%K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 7

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Geniosil GF 80 | 0,50 |
| Acetylaceton | 0,50 |

| Lösemittel | |
|---|---|
| Cyclohexan | 40,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 60,4 (K) | 64,1 (K) | 62,3 (K) | 65,1 (K) |
| 1 | 2 (PP/EPDM gerippt) | 5,3 (K) | 5,6 (K) | 5,1 (K) | 5,9 (K) |
| 1 | 3 (PP/EPDM gerippt) | 5,1 (K) | 6,2 (K) | 5,3 (K) | 5,4 (K) |
| 1 | 4 (PP/EPDM gerippt) | 5,6 (K) | 5,2 (K) | 5,9 (K) | 5,0 (K) |
| 1 | 5 (PP) | 57,9 (90%K) | 59,2 (90%K) | nb | nb |
| 1 | 6 (feuerverzinkter Stahl) | 62,5 (K) | 66,1 (K) | nb | nb |
| 1 | 7 (ABS) | 59,1 (90%K) | 60,3 (K) | nb | nb |
| 1 | 8 (PVC) | 60,3 (K) | 63,2 (K) | nb | nb |
| 3 (Einschicht AC/SBS) | 1 (PP/EPDM glatt) | 59,3 (K) | 62,3 (K) | 55,7 (K) | 57,2 (K) |
| 3 | 2 (PP/EPDM gerippt) | 5,1 (K) | 5,9 (K) | 5,3 (K) | 5,2 (K) |
| 3 | 3 (PP/EPDM gerippt) | 5,1 (K) | 5,9 (K) | 5,3 (K) | 5,6 (K) |
| 3 | 4 (PP/EPDM gerippt) | 5,3 (K) | 5,4 (K) | 5,1 (K) | 5,2 (K) |
| 3 | 5 (PP) | 59,1 (90%K) | 62,6 (K) | nb | nb |
| 3 | 6 (feuerverzinkter Stahl) | 60,4 (K) | 61,0 (K) | nb | nb |
| 3 | 7 (ABS) | 61,4 (K) | 59,2 (K) | nb | nb |
| 3 | 8 (PVC) | 59,3 (90%K) | 60,4 (K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 8

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Geniosil GF 80 | 0,50 |
| Desmophen A 365 | 2,60 |
| Acetylaceton | 0,50 |

| Lösemittel | |
|---|---|
| Cyclohexan | 37,50 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 62,3 (K) | 64,9 (K) | 63,1 (K) | 59,4 (K) |
| 1 | 2 (PP/EPDM gerippt) | 5,6 (K) | 5,9 (K) | 5,2 (K) | 5,2 (K) |
| 1 | 3 (PP/EPDM gerippt) | 5,4 (K) | 5,2 (K) | 5,3 (K) | 5,7 (K) |
| 1 | 4 (PP/EPDM gerippt) | 4,8 (K) | 4,9 (K) | 5,2 (K) | 5,3 (K) |
| 1 | 5 (PP) | 57,2 (90%K) | 60,9 (K) | nb | nb |
| 1 | 6 (feuerverzinkter Stahl) | 59,3 (90%K) | 62,1 (K) | nb | nb |
| 1 | 7 (ABS) | 56,3 (90%K) | 62,3 (K) | nb | nb |
| 1 | 8 (PVC) | 62,4 (K) | 65,1 (K) | nb | nb |
| 3 (Einschicht AC/SBS) | 1 (PP/EPDM glatt) | 59,3 (K) | 62,3 (K) | 56,7 (K) | 52,3 (K) |
| 3 | 2 (PP/EPDM gerippt) | 5,4 (K) | 6,3 (K) | 6,1 (K) | 6,9 (K) |
| 3 | 3 (PP/EPDM gerippt) | 5,9 (K) | 5,9 (K) | 5,4 (K) | 5,7 (K) |
| 3 | 4 (PP/EPDM gerippt) | 5,8 (K) | 5,5 (K) | 5,6 (K) | 6,0 (K) |
| 3 | 5 (PP) | 59,6 (K) | 61,3 (K) | nb | nb |
| 3 | 6 (feuerverzinkter Stahl) | 62,4 (K) | 66,2 (K) | nb | nb |
| 3 | 7 (ABS) | 64,1 (K) | 60,3 (K) | nb | nb |
| 3 | 8 (PVC) | 62,7 (K) | 63,0 (K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 9

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Geniosil GF 80 | 0,50 |
| Desmophen A 365 | 2,60 |
| Epikote 828 | 0,20 |
| Acetylaceton | 0,50 |
| Tinopal OB | 0,15 |

| Lösemittel | |
|---|---|
| Cyclohexan | 37,15 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 63,6 (K) | 64,3 (K) | 63,7 (K) | 60,9 (K) |
| 1 | 2 (PP/EPDM gerippt) | 5,8 (K) | 6,8 (K) | 6,4 (K) | 6,1 (K) |
| 1 | 3 (PP/EPDM gerippt) | 5,3 (K) | 5,9 (K) | 5,9 (K) | 6,7 (K) |
| 1 | 4 (PP/EPDM gerippt) | 5,4 (K) | 5,6 (K) | 5,4 (K) | 5,8 (K) |
| 1 | 5 (PP) | 60,5 (K) | 63,8 (K) | 62,7 (K) | 63,1 (K) |
| 1 | 6 (feuerverzinkter Stahl) | 59,9 (K) | 65,2 (K) | 64,6 (K) | 63,3 (K) |
| 1 | 7 (ABS) | 62,3 (K) | 66,1 (K) | 64,1 (K) | 63,1 (K) |
| 1 | 8 (PVC) | 62,6 (K) | 62,8 (K) | 64,7 (K) | 63,3 (K) |
| 3 (Einschicht AC/SBS) | 1 (PP/EPDM glatt) | 59,9 (K) | 61,7 (K) | 59,6 (K) | 62,4 (K) |
| 3 | 2 (PP/EPDM gerippt) | 5,6 (K) | 6,5 (K) | 6,5 (K) | 7,3 (K) |
| 3 | 3 (PP/EPDM gerippt) | 6,2 (K) | 6,9 (K) | 6,8 (K) | 6,7 (K) |
| 3 | 4 (PP/EPDM gerippt) | 6,2 (K) | 6,5 (K) | 6,9 (K) | 6,4 (K) |
| 3 | 5 (PP) | 62,2 (K) | 64,0 (K) | 62,1 (K) | 64,6 (K) |
| 3 | 6 (feuerverzinkter Stahl) | 63,0 (K) | 66,9 (K) | 64,3 (K) | 65,1 (K) |
| 3 | 7 (ABS) | 65,3 (K) | 62,1 (K) | 66,1 (K) | 62,4 (K) |
| 3 | 8 (PVC) | 62,9 (K) | 65,4 (K) | 64,1 (K) | 65,0 (K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 10

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 2,00 |
| Geniosil GF 80 | 1,00 |
| Desmophen A 365 | 2,60 |
| Epikote 828 | 0,20 |
| Acetylaceton | 1,00 |
| Tinopal OB | 0,15 |

| Lösemittel | |
|---|---|
| Cyclohexan | 35,00 |
| Xylol | 19,70 |
| Ethylbenzol | 5,00 |
| Aceton | 6,65 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 64,1 (K) | 65,1 (K) | 60,3 (K) | 62,8 (K) |
| 1 | 2 (PP/EPDM gerippt) | 5,3 (K) | 5,3 (K) | 5,7 (K) | 5,1 (K) |
| 1 | 3 (PP/EPDM gerippt) | 5,0 (K) | 5,3 (K) | 4,6 (K) | 4,9 (K) |
| 1 | 4 (PP/EPDM gerippt) | 5,1 (K) | 5,7 (K) | 5,3 (K) | 5,9 (K) |
| 1 | 5 (PP) | 59,2 (K) | 60,1 (K) | 60,8 (K) | 64,3 (K) |
| 1 | 6 (feuerverzinkter Stahl) | 62,3 (K) | 66,0 (K) | 62,7 (K) | 65,1 (K) |
| 1 | 7 (ABS) | 61,6 (K) | 64,3 (K) | 63,2 (K) | 60,6 (K) |
| 1 | 8 (PVC) | 60,7 (K) | 61,9 (K) | 63,6 (K) | 61,4 (K) |
| 3 (Einschicht AC/SBS) | 1 (PP/EPDM glatt) | 62,3 (K) | 64,8 (K) | 62,0 (K) | 62,5 (K) |
| 3 | 2 (PP/EPDM gerippt) | 5,7 (K) | 5,9 (K) | 5,5 (K) | 5,0 (K) |
| 3 | 3 (PP/EPDM gerippt) | 5,3 (K) | 5,2 (K) | 5,3 (K) | 5,6 (K) |
| 3 | 4 (PP/EPDM gerippt) | 5,7 (K) | 5,9 (K) | 5,8 (K) | 5,4 (K) |
| 3 | 5 (PP) | 61,4 (K) | 63,2 (K) | 61,9 (K) | 63,7 (K) |
| 3 | 6 (feuerverzinkter Stahl) | 60,0 (K) | 64,3 (K) | 64,3 (K) | 63,2 (K) |
| 3 | 7 (ABS) | 62,1 (K) | 64,7 (K) | 65,2 (K) | 61,6 (K) |
| 3 | 8 (PVC) | 61,2 (K) | 63,6 (K) | 66,6 (K) | 64,2 (K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Vergleichendes Beispiel 11

Zusammensetzung des Primers:

| Rohstoff / Komponente | Gewichtsprozent |
|---|---|
| Primer-Haftklebstoff 2 (40 Gewichtsprozent Feststoffanteil) | 10,40 |
| Hardlen F6 P | 1,50 |
| Tyzor TPT | 0,50 |
| Geniosil GF 80 | 0,50 |
| Desmophen A 365 | 2,60 |
| Epikote 828 | 0,20 |
| Acetylaceton | 0,50 |
| Tinopal OB | 0,15 |

| Lösemittel | |
|---|---|
| Cyclohexan | 37,15 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 1 (Einschicht AC) | 1 (PP/EPDM glatt) | 59,8 (K) | 63.1 (K) | nb | nb |
| 1 | 2 (PP/EPDM gerippt) | 6.2 (K) | 6,4 (K) | nb | nb |
| 1 | 3 (PP/EPDM gerippt) | 6,1 (K) | 6,8 (K) | nb | nb |
| 1 | 4 (PP/EPDM gerippt) | 6,2 (K) | 6,7 (K) | nb | nb |
| 1 | 5 (PP) | nb | nb | nb | nb |
| 1 | 6 (feuerverzinkter Stahl) | nb | nb | nb | nb |
| 1 | 7 (ABS) | nb | nb | nb | nb |
| 1 | 8 (PVC) | nb | nb | nb | nb |
| 3 (Einschicht AC/SBS) | 1 (PP/EPDM glatt) | 62,1 (K) | 65,6 (K) | nb | nb |
| 3 | 2 (PP/EPDM gerippt) | 5,3 (K) | 5,9 (K) | 5.1 (K) | 5,6 (K) |
| 3 | 3 (PP/EPDM gerippt) | 5,9 (K) | 6,0 (K) | nb | nb |
| 3 | 4 (PP/EPDM gerippt) | 5,5 (K) | 6,0 (K) | nb | nb |
| 3 | 5 (PP) | 59,2 (90%K) | 59,9 (90%K) | 58,2 (90%K) | 60,6 (90%K) |
| 3 | 6 (feuerverzinkter Stahl) | 61,2 (K) | 64,6 (K) | 64,0 (K) | 65,3 (K) |
| 3 | 7 (ABS) | 61,4 (K) | 64,6 (K) | nb | nb |
| 3 | 8 (PVC) | 60,8 (K) | 62,6 (K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 12

Zusammensetzung des Primers:

| Rohstoff / Komponente | Gewichtsprozent |
|---|---|
| Primer-Haftklebstoff 3 (40 Gewichtsprozent Feststoffanteil) | 10,40 |
| Hardlen F6 P | 1,50 |
| Tyzor TPT | 0,50 |
| Geniosil GF 80 | 0,50 |
| Desmophen A 365 | 2,60 |
| Epikote 828 | 0,20 |
| Acetylaceton | 0,50 |
| Tinopal OB | 0,15 |

| Lösemittel | |
|---|---|
| Cyclohexan | 37,15 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 3 (Einschicht AC/SBS) | 1 (PP/EPDM glatt) | 60,7 (K) | 63,2 (K) | nb | nb |
| 3 | 2 (PP/EPDM gerippt) | 5,9 (K) | 6,1 (K) | 6,0 (K) | 6,3 (K) |
| 3 | 5 (PP) | 57,4 (90%K) | 59,3 (90%K) | 54,1 (80%K) | 55,6 (80%K) |
| 3 | 6 (feuerverzinkter Stahl) | 63,6 (K) | 61,7 (K) | 63,2 (K) | 60,6 (K) |
| 3 | 8 (PVC) | 61,7 (K) | 62,9 (K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 13

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TnBT | 0,50 |
| Geniosil GF 80 | 0,50 |
| Desmophen A 365 | 2,60 |
| Epikote 828 | 0,20 |
| Acetylaceton | 0,50 |

| Lösemittel | |
|---|---|
| Cyclohexan | 37,30 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 3 (Einschicht AC/SBS) | 1 (PP/EPDM glatt) | 62,6 (K) | 65,1 (K) | nb | nb |
| 3 | 2 (PP/EPDM gerippt) | 5,6 (K) | 5,9 (K) | 5,2 (K) | 5,6 (K) |
| 3 | 5 (PP) | 56,6 (80%K) | 60,1 (90%K) | 55,9 (80%K) | 50,3 (80%K) |
| 3 | 6 (feuerverzinkter Stahl) | 61,9 (K) | 65,6 (K) | 61,7 (K) | 62,3 (K) |
| 3 | 8 (PVC) | 64,7 (K) | 65,6 (K) | nb | nb |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 14

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor AA-95 | 0,50 |
| Geniosil GF 80 | 0,50 |
| Desmophen A 365 | 2,60 |
| Epikote 828 | 0,20 |
| Acetylaceton | 0,50 |

| Lösemittel | |
|---|---|
| Cyclohexan | 37,30 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 3 (Einschicht AC/SBS) | 1 (PP/EPDM glatt) | 61,7 (K) | 62,6 (K) | nb | nb |
| 3 | 2 (PP/EPDM gerippt) | 5,1 (K) | 5,8 (K) | 5,4 (K) | 5,2 (K) |
| 3 | 5 (PP) | 43,7 (50%K) | 48,3 (60%K) | 49,6 (60%K) | 40,1 (50%K) |
| 3 | 6 (feuerverzinkter Stahl) | 63,6 (K) | 66,8 (K) | 63,7 (K) | 65,6 (K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 15

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor NBZ | 0,50 |
| Geniosil GF 80 | 0,50 |
| Desmophen A 365 | 2,60 |
| Epikote 828 | 0,20 |
| Acetylaceton | 0,50 |

| Lösemittel | |
|---|---|
| Cyclohexan | 37,30 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 3 (Einschicht AC/SBS) | 1 (PP/EPDM glatt) | 59,6 (K) | 61,7 (K) | nb | nb |
| 3 | 2 (PP/EPDM gerippt) | 5,9 (K) | 6,7 (K) | 6.2 (K) | 6,3 (K) |
| 3 | 5 (PP) | 53,6 (70%K) | 54,9 (70%K) | 55,9 (80%K) | 56,6 (90%K) |
| 3 | 6 (feuerverzinkter Stahl) | 61,2 (K) | 65,7 (K) | 60,6 (K) | 62,4 (K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Beispiel 16

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Geniosil XL 10 | 0,50 |
| Desmophen A 365 | 2,60 |
| Epikote 828 | 0,20 |
| Acetylaceton | 0,50 |

| Lösemittel | |
|---|---|
| Cyclohexan | 37,30 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (N/cm) | |
|---|---|---|---|---|---|
| | | nach 3 min | nach 30 min | a) 2 Wo 85°C/ 85% rel. Feuchte | b) 2 Wo Klimawechsel |
| 3 (Einschicht AC/SBS) | 1 (PP/EPDM glatt) | 62,7 (K) | 65,6 (K) | nb | nb |
| 3 | 2 (PP/EPDM gerippt) | 6,5 (K) | 6,9 (K) | 6,4 (K) | 6,8 (K) |
| 3 | 5 (PP) | 55,7 (80%K) | 57,6 (90%K) | 58,6 (90%K) | 56,3 (80%K) |
| 3 | 6 (feuerverzinkter Stahl) | 65,1 (K) | 63,6 (K) | 62,3 (K) | 65,1 (K) |

| | | | | | |
|---|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | | |

### Vergleichsbeispiel 1

Zusammensetzung des Vergleichsprimers:

| Rohstoff / Komponente | Gewichtsprozent |
|---|---|
| Primer-Haftklebstoff 4 (40 Gewichtsprozent Feststoffanteil) | 10,40 |
| Hardlen DX 526 P | 1,50 |
| Tyzor TPT | 0,50 |

| Lösemittel | |
|---|---|
| Cyclohexan | 41,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Vergleichsprimer wurde in den folgenden Kombinationen geprüft, wobei die folgenden Ergebnisse erhalten wurden:

| Testklebeband | Substrat | Klebkraft (300mm/min) (N/cm) | |
|---|---|---|---|
| | | nach 3 min | nach 30 min |
| 3 (Einschicht AC/SBS) | 1 (PP/EPDM glatt) | 4,1 (A) | 5,2 (A) |
| 3 | 2 (PP/EPDM gerippt) | 1,7 (A) | 1,9 (A) |
| 3 | 5 (PP) | 5,6 (A) | 6,3 (A) |
| 3 | 6 (feuerverzinkter Stahl) | 5,4 (A) | 5,7 (A) |

| | | | |
|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | |

### Vergleichsbeispiel 2

Zusammensetzung des Vergleichsprimers:

| Rohstoff / Komponente | Gewichtsprozent |
|---|---|
| Primer-Haftklebstoff 4 (40 Gewichtsprozent Feststoffanteil) | 10,40 |
| Hardlen F6 P | 1,50 |
| Tyzor TnBT | 0,50 |

| Lösemittel | |
|---|---|
| Cyclohexan | 41,10 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Vergleichsprimer wurde in den folgenden Kombinationen geprüft, wobei die folgenden Ergebnisse erhalten wurden:

| Testklebeband | Substrat | Klebkraft (300mm/min) (N/cm) | |
|---|---|---|---|
| | | nach 3 min | nach 30 min |
| 3 (Einschicht AC/SBS) | 1 (PP/EPDM glatt) | 6,3 (A) | 7,6 (A) |
| 3 | 2 (PP/EPDM gerippt) | 1,5 (A) | 1,8 (A) |
| 3 | 5 (PP) | 4,9 (A) | 5,2 (A) |
| 3 | 6 (feuerverzinkter Stahl) | 5,1 (A) | 5,6 (A) |

| | | | |
|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | |

### Beispiel 17

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TPT | 0,50 |
| Kraton® D 1102 E | 0,50 |

| Lösemittel | |
|---|---|
| Cyclohexan | 40,60 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | |
|---|---|---|---|---|
| | | nach 3 min | nach 30 min | nach 24 Stunden |
| 1 (Einschicht AC) | 1 (PP/EPDM glatt) | 21,4 (A) | 23,6 (A) | 24,1 (A) |
| 1 | 2 (PP/EPDM gerippt) | 2,3 (A) | 3,2 (A) | 3,7 (A) |
| 1 | 3 (PP/EPDM gerippt) | 2,2 (A) | 2,9 (A) | 3,0 (A) |
| 1 | 4 (PP/EPDM gerippt) | 2,4 (A) | 2,8 (A) | 3,0 (A) |
| 3 (Einschicht AC/SBS) | 1 (PP/EPDM glatt) | 24,2 (A) | 25,8 (A) | 26,8 (A) |
| 3 | 2 (PP/EPDM gerippt) | 2,2 (A) | 2,6 (A) | 3,2 (A) |
| 3 | 3 (PP/EPDM gerippt) | 2,3 (A) | 3,1 (A) | 3,2 (A) |
| 3 | 4 (PP/EPDM gerippt) | 2,5 (A) | 3,3 (A) | 3,8 (A) |

| | | | | |
|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat | | | | |

### Beispiel 18

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen DX 526 P | 1,50 |
| Tyzor TPT | 0,50 |
| Kraton® G 1652 E | 0,50 |

| Lösemittel | |
|---|---|
| Cyclohexan | 40,60 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | |
|---|---|---|---|---|
| | | nach 3 min | nach 30 min | nach 24 Stunden |
| 1 (Einschicht AC) | 1 (PP/EPDM glatt) | 22,2 (A) | 23,8 (A) | 24,6 (A) |
| 1 | 2 (PP/EPDM gerippt) | 2,4 (A) | 2,6 (A) | 2,7 (A) |
| 1 | 3 (PP/EPDM gerippt) | 2,3 (A) | 2,9 (A) | 3,1 (A) |
| 1 | 4 (PP/EPDM gerippt) | 2,4 (A) | 2,6 (A) | 3,9 (A) |
| 3 (Einschicht AC/SBS) | 1 (PP/EPDM glatt) | 23,9 (A) | 25,2 (A) | 25,8 (A) |
| 3 | 2 (PP/EPDM gerippt) | 2,4 (A) | 2,7 (A) | 3,0 (A) |
| 3 | 3 (PP/EPDM gerippt) | 2,4 (A) | 3,0 (A) | 3,1 (A) |
| 3 | 4 (PP/EPDM gerippt) | 2,5 (A) | 3,1 (A) | 3,5 (A) |

| | | | | |
|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat | | | | |

### Beispiel 19

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Kraton® D 1102 E | 0,50 |
| Geniosil GF 80 | 0,50 |
| Desmophen A 365 | 2,60 |
| Epikote 828 | 0,20 |
| Acetylaceton | 0,50 |
| Tinopal OB | 0,15 |

| Lösemittel | |
|---|---|
| Cyclohexan | 36,65 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | |
|---|---|---|---|---|
| | | nach 3 min | nach 30 min | nach 24 Stunden |
| 1 (Einschicht AC) | 1 (PP/EPDM glatt) | 25,7 (A) | 28,2 (A) | 28,9 (A) |
| 1 | 2 (PP/EPDM gerippt) | 3,0 (A) | 3,3 (A) | 3,6 (A) |
| 1 | 3 (PP/EPDM gerippt) | 3,1 (A) | 3,2 (A) | 3,7 (A) |
| 1 | 4 (PP/EPDM gerippt) | 3,2 (A) | 3,8 (A) | 4,0 (A) |
| 3 (Einschicht AC/SBS) | 1 (PP/EPDM glatt) | 24,9 (A) | 26,3 (A) | 26,9 (A) |
| 3 | 2 (PP/EPDM gerippt) | 2,6 (A) | 2,6 (A) | 3,1 (A) |
| 3 | 3 (PP/EPDM gerippt) | 2,7 (A) | 3,0 (A) | 3,2 (A) |
| 3 | 4 (PP/EPDM gerippt) | 2,9 (A) | 3,5 (A) | 3,9 (A) |

| | | | | |
|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | |

### Beispiel 20

Zusammensetzung des Primers:

| Rohstoff / Komponente | Gewichtsprozent |
|---|---|
| Primer-Haftklebstoff 1 (40 Gewichtsprozent Feststoffanteil) | 10,40 |
| Hardlen F6 P | 1,50 |
| Tyzor TPT | 0,50 |
| Kraton® G 1652 E | 0,50 |
| Geniosil GF 80 | 0,50 |
| Desmophen A 365 | 2,60 |
| Epikote 828 | 0,20 |
| Acetylaceton | 0,50 |
| Tinopal OB | 0,15 |

| Lösemittel | |
|---|---|
| Cyclohexan | 36,65 |
| Xylol | 19,70 |
| Ethylbenzol | 5,00 |
| Aceton | 7,00 |
| Benzin | 3,70 |
| Isopropanol | 9,10 |
| Ethylacetat | 2,00 |
| Total | 100,00 |

Der Primer wurde in den folgenden Kombinationen geprüft, wobei die folgenden Ergebnisse erhalten wurden:

| Testklebeband | Substrat | Klebkraft (300mm/min) (N/cm) | | |
|---|---|---|---|---|
| | | nach 3 min | nach 30 min | nach 24 Stunden |
| 1 (Einschicht AC) | 1 (PP/EPDM glatt) | 25,3 (A) | 27,8 (A) | 27,9 (A) |
| 1 | 2 (PP/EPDM gerippt) | 2,0 (A) | 3,6 (A) | 3,8 (A) |
| 1 | 3 (PP/EPDM gerippt) | 2,9 (A) | 2,9 (A) | 3,2 (A) |
| 1 | 4 (PP/EPDM gerippt) | 2,6 (A) | 2,9 (A) | 3,6 (A) |
| 3 (Einschicht AC/SBS) | 1 (PP/EPDM glatt) | 25,1 (A) | 26,7 (A) | 27,8 (A) |
| 3 | 2 (PP/EPDM gerippt) | 2,4 (A) | 2,9 (A) | 3,6 (A) |
| 3 | 3 (PP/EPDM gerippt) | 2,6 (A) | 3,0 (A) | 3,1 (A) |
| 3 | 4 (PP/EPDM gerippt) | 2,1 (A) | 2,3 (A) | 3,0 (A) |

| | | | | |
|---|---|---|---|---|
| K = Kohäsive Spaltung des Klebebandes (Prozentangabe bezieht sich auf den kohäsiven Anteil; ohne Prozentangabe = 100% K) A = Adhäsives Ablösen des Klebebandes vom Primer oder des Primers vom Substrat nb = nicht bestimmt | | | | |

Der Primer wurde in den folgenden Kombinationen geprüft, wobei die folgenden Ergebnisse erhalten wurden:

| Testklebeband | Substrat | Klebkraft (300mm/min) (N/cm) | | |
|---|---|---|---|---|
| | | nach 3 min | nach 30 min | nach 24 Stunden |
| 1 (Einschicht AC) | 1 (PP/EPDM glatt) | 25,3 (A) | 27,8 (A) | 27,9 (A) |
| 1 | 2 (PP/EPDM gerippt) | 2,0 (A) | 3,6 (A) | 3,8 (A) |
| 1 | 3 (PP/EPDM gerippt) | 2,9 (A) | 2,9 (A) | 3,2 (A) |
| 1 | 4 (PP/EPDM gerippt) | 2,6 (A) | 2,9 (A) | 3,6 (A) |
| 3 (Einschicht AC/SBS) | 1 (PP/EPDM glatt) | 25,1 (A) | 26,7 (A) | 27,8 (A) |
| 3 | 2 (PP/EPDM gerippt) | 2,4 (A) | 2,9 (A) | 3,6 (A) |
| 3 | 3 (PP/EPDM gerippt) | 2,6 (A) | 3,0 (A) | 3,1 (A) |
| 3 | 4 (PP/EPDM gerippt) | 2,1 (A) | 2,3 (A) | 3,0 (A) |

| | | | | |
|---|---|---|---|---|
| K = Kohäsive Spaltung des Klebebandes (Prozentangabe bezieht sich auf den kohäsiven Anteil: ohne Prozentangabe = 100% K) A = Adhäsives Ablösen des Klebebandes vom Primer oder des Primers vom Substrat nb = nicht bestimmt | | | | |

## Patentansprüche

1. Primer, umfassend eine in einem oder mehreren Lösemitteln gelöste oder dispergierte Mischung G aus
- mindestens einem Copolymerisat, erhalten durch Copolymerisation einer Monomerenmischung, umfassend zu mindestens 90 Gew.-% die folgenden Monomere:
- Vinylcaprolactam und/oder Vinylpyrrolidon;
- eines oder mehrere der Monomere a) und/oder b):
a) Acrylsäureester eines linearen, primären Alkohols mit 2 bis 10 Kohlenstoffatomen im Alkylrest des Alkohols,
b) Acrylsäureester eines verzweigten, nichtzyklischen Alkohols mit 3 bis 12 Kohlenstoffatomen im Alkylrest des Alkohols,
- mindestens einem chlorierten Polyolefin,
- mindestens einer Metallverbindung ausgewählt aus der Gruppe bestehend aus Metallacetylacetonaten, Metallalkoxiden und Alkoxy-Metallacetylacetonaten,
**dadurch gekennzeichnet, dass** die Monomerenmischung n-Butylacrylat enthält.

2. Primer gemäß Anspruch 1, **dadurch gekennzeichnet, dass** das Copolymerisat ein Haftklebstoff ist.

3. Primer gemäß einem der vorangegangenen Ansprüche, **dadurch gekennzeichnet, dass** die Summe der Gewichtsanteile von Vinylcaprolactam und Vinylpyrrolidon an der Monomerenmischung mindestens 10 Gew.-% und maximal 50 Gew.-%, bezogen auf das Gesamtgewicht der Monomerenmischung, beträgt.

4. Primer gemäß einem der vorangegangenen Ansprüche, **dadurch gekennzeichnet, dass** das Metall der Metallverbindung ausgewählt aus der Gruppe bestehend aus Titan, Aluminium, Zirkonium, Zink und Eisen ist.

5. Primer gemäß einem der vorangegangenen Ansprüche, **dadurch gekennzeichnet, dass** die Konzentration des Copolymerisats, bezogen auf das Gesamtgewicht des Primers, von einschließlich 1 Gew.-% bis einschließlich 30 Gew.-% beträgt.

6. Primer gemäß einem der vorangegangenen Ansprüche, **dadurch gekennzeichnet, dass** das chlorierte Polyolefin mit einer α, β-ungesättigten Carbonsäure oder deren Anhydrid, insbesondere mit Maleinsäureanhydrid und / oder mit einem Acrylat modifiziert ist.

7. Primer gemäß einem der vorangegangenen Ansprüche, **dadurch gekennzeichnet, dass** der Primer frei von Blockcopolymeren des Typs Polystyrol/Polydien oder Polystyrol/hydriertes Polydien ist.

8. Primer gemäß einem der vorangegangenen Ansprüche, **dadurch gekennzeichnet, dass** der Primer zusätzlich mindestens ein organofunktionelles Silan der allgemeinen Struktur (I)
(R¹O-)ₓSi(R²)_{y}(R³)_{z} (I)
enthält, worin die Reste R¹ unabhängig voneinander für einen C₁-C₄-Alkylrest, einen C₂-C₆-Alkoxyalkylrest oder einen Acetylrest stehen; der Rest R² für einen Aminoalkylrest, eine Vinylgruppe, einen Methacryloxyalkylrest, einen Isocyanatoalkylrest, einen O-Methylcarbamatoalkylrest, einen Glycidoxyalkylrest oder einen Phenylrest steht; die Reste R³ unabhängig voneinander für einen C₁-C₁₈-Alkylrest stehen und x = 1, 2 oder 3; y = 0 oder 1 und z = 4 - x - y ist.

9. Primer gemäß einem der vorangegangenen Ansprüche, **dadurch gekennzeichnet, dass** der Primer zusätzlich ein oder mehrere Epoxidharze enthält.

10. Primer gemäß einem der vorangegangenen Ansprüche, **dadurch gekennzeichnet, dass** der Primer zusätzlich ein oder mehrere Styrolacrylatharze enthält.

11. Primer gemäß einem der vorangegangenen Ansprüche, **dadurch gekennzeichnet, dass** der Primer zusätzlich Acetylaceton enthält.

12. Primer gemäß einem der vorangegangenen Ansprüche, **dadurch gekennzeichnet, dass** der Primer einen oder mehrere fluoreszierende optische Aufheller enthält.

13. Verwendung eines Primers gemäß einem der vorangegangenen Ansprüche zur Herstellung einer haftvermittelnden Schicht.

14. Verfahren zum Herstellen einer haftvermittelnden Schicht auf einem Substrat, umfassend das Aufbringen eines Primers gemäß einem der Ansprüche 1 bis 12 auf ein Substrat und das Entfernen des einen oder der mehreren Lösemittel.

## Claims

1. Primer comprising a mixture G, in dispersion or solution in one or more solvents, of
- at least one copolymer obtained by copolymerizing a monomer mixture comprising the following monomers to an extent of at least 90 wt%:
- vinylcaprolactam and/or vinylpyrrolidone;
- one or more monomers a) and/or b):
a) acrylic esters of a linear primary alcohol having 2 to 10 carbon atoms in the alkyl radical of the alcohol,
b) acrylic esters of a branched acyclic alcohol having 3 to 12 carbon atoms in the alkyl radical of the alcohol,
- at least one chlorinated polyolefin,
at least one metal compound selected from the group consisting of metal acetylacetonates, metal alkoxides and alkoxy metal acetylacetonates, **characterized in that** the monomer mixture comprises n-butyl acrylate.

2. Primer according to Claim 1, **characterized in that** the copolymer is a pressure-sensitive adhesive.

3. Primer according to either of the preceding claims, **characterized in that** the sum total of the proportions by weight of vinylcaprolactam and vinylpyrrolidone in the monomer mixture is at least 10 wt% and at most 50 wt%, based on the total weight of the monomer mixture.

4. Primer according to any of the preceding claims, **characterized in that** the metal in the metal compound is selected from the group consisting of titanium, aluminium, zirconium, zinc and iron.

5. Primer according to any of the preceding claims, **characterized in that** the concentration of the copolymer, based on the total weight of the primer, is from 1 wt% inclusive to 30 wt% inclusive.

6. Primer according to any of the preceding claims, **characterized in that** the chlorinated polyolefin has been modified with an α,β-unsaturated carboxylic acid or anhydride thereof, especially with maleic anhydride, and/or with an acrylate.

7. Primer according to any of the preceding claims, **characterized in that** the primer is free of block copolymers of the polystyrene/polydiene or polystyrene/hydrogenated polydiene type.

8. Primer according to any of the preceding claims, **characterized in that** the primer additionally contains at least one organofunctional silane of the general structure (I)
(R¹O-)ₓSi(R²)_{y}(R³)_{z} (I)
in which the R¹ radicals are each independently a C₁-C₄-alkyl radical, a C₂-C₆-alkoxyalkyl radical or an acyl radical; the R² radical is an aminoalkyl radical, a vinyl group, a methacryloyloxyalkyl radical, an isocyanatoalkyl radical, an O-methylcarbamatoalkyl radical, a glycidoxyalkyl radical or a phenyl radical; the R³ radicals are each independently a C₁-C₁₈-alkyl radical and x = 1, 2 or 3; y = 0 or 1 and z = 4 - x - y.

9. Primer according to any of the preceding claims, **characterized in that** the primer additionally comprises one or more epoxy resins.

10. Primer according to any of the preceding claims, **characterized in that** the primer additionally comprises one or more styrene-acrylate resins.

11. Primer according to any of the preceding claims, **characterized in that** the primer additionally comprises acetylacetone.

12. Primer according to any of the preceding claims, **characterized in that** the primer comprises one or more fluorescent optical brighteners.

13. Use of a primer according to any of the preceding claims for production of an adhesion-promoting layer.

14. Method for producing an adhesion-promoting layer on a substrate, comprising the application of a primer according to any of Claims 1 to 12 to a substrate and the removal of the one or more solvents.

## Revendications

1. Agent primaire, comprenant un mélange G dissous ou dispersé dans un ou plusieurs solvants, constitué par :
- au moins un copolymère, obtenu par copolymérisation d'un mélange de monomères, comprenant à hauteur d'au moins 90 % en poids les monomères suivants :
- du vinylcaprolactame et/ou de la vinylpyrrolidone ;
- un ou plusieurs des monomères a) et/ou b) ;
a) un ester de l'acide acrylique d'un alcool primaire linéaire contenant 2 à 10 atomes de carbone dans le radical alkyle de l'alcool,
b) un ester de l'acide acrylique d'un alcool non cyclique ramifié contenant 3 à 12 atomes de carbone dans le radical alkyle de l'alcool,
- au moins une polyoléfine chlorée,
- au moins un composé métallique choisi dans le groupe constitué par les acétylacétonates de métaux, les alcoxydes de métaux et les acétylacétonates d'alcoxy-métaux,
**caractérisé en ce que** le mélange de monomères contient de l'acrylate de n-butyle.

2. Agent primaire selon la revendication 1, **caractérisé en ce que** le copolymère est un adhésif de contact.

3. Agent primaire selon l'une quelconque des revendications précédentes, **caractérisé en ce que** la somme des proportions en poids de vinylcaprolactame et de vinylpyrrolidone par rapport au mélange de monomères est d'au moins 10 % en poids et d'au plus 50 % en poids, par rapport au poids total du mélange de monomères.

4. Agent primaire selon l'une quelconque des revendications précédentes, **caractérisé en ce que** le métal du composé métallique est choisi dans le groupe constitué par le titane, l'aluminium, le zirconium, le zinc et le fer.

5. Agent primaire selon l'une quelconque des revendications précédentes, **caractérisé en ce que** la concentration du copolymère, par rapport au poids total de l'agent primaire, est de 1 % en poids inclus à 30 % en poids inclus.

6. Agent primaire selon l'une quelconque des revendications précédentes, **caractérisé en ce que** la polyoléfine chlorée est modifiée avec un acide carboxylique α,β-insaturé ou son anhydride, notamment avec de l'anhydride de l'acide maléique et/ou avec un acrylate.

7. Agent primaire selon l'une quelconque des revendications précédentes, **caractérisé en ce que** l'agent primaire est exempt de copolymères séquencés du type polystyrène/polydiène ou polystyrène/polydiène hydrogéné.

8. Agent primaire selon l'une quelconque des revendications précédentes, **caractérisé en ce que** l'agent primaire contient en outre au moins un silane organofonctionnel de la structure générale (I) :
(R¹O-)ₓSi(R²)_{y}(R³)_{z} (I),
dans laquelle les radicaux R¹ représentent indépendamment les uns des autres un radical alkyle en C₁-C₄, un radical alcoxyalkyle en C₂-C₆ ou un radical acétyle ; le radical R² représente un radical aminoalkyle, un groupe vinyle, un radical méthacryloxyalkyle, un radical isocyanatoalkyle, un radical O-méthylcarbamatoalkyle, un radical glycidoxyalkyle ou un radical phényle ; les radicaux R³ représentent indépendamment les uns des autres un radical alkyle en C₁-C₁₈ et x = 1, 2 ou 3 ; y = 0 ou 1 et z = 4-x-y.

9. Agent primaire selon l'une quelconque des revendications précédentes, **caractérisé en ce que** l'agent primaire contient en outre une ou plusieurs résines époxydes.

10. Agent primaire selon l'une quelconque des revendications précédentes, **caractérisé en ce que** l'agent primaire contient en outre une ou plusieurs résines d'acrylate de styrène.

11. Agent primaire selon l'une quelconque des revendications précédentes, **caractérisé en ce que** l'agent primaire contient en outre de l'acétylacétone.

12. Agent primaire selon l'une quelconque des revendications précédentes, **caractérisé en ce que** l'agent primaire contient un ou plusieurs azurants optiques fluorescents.

13. Utilisation d'un agent primaire selon l'une quelconque des revendications précédentes pour la fabrication d'une couche de promoteur d'adhésion.

14. Procédé de fabrication d'une couche de promoteur d'adhésion sur un substrat, comprenant l'application d'un agent primaire selon l'une quelconque des revendications 1 à 12 sur un substrat et l'élimination du ou des solvants.
